# EUROPÄISCHE PATENTSCHRIFT

(11) **EP 3 804 946 B1**
(45) Veröffentlichungstag und Bekanntmachung des Hinweises auf die Patenterteilung: **20.04.2022**
(21) Anmeldenummer: 20200661.5
(22) Anmeldetag: 08.10.2020
(51) Int. Cl.: B29C 45/14, B29C 45/76, B29C 33/12, B29C 45/84

(54) **MAGAZINVORRICHTUNG UND VERFAHREN ZUM ZUFÜHREN VON EINLEGETEILEN IN EIN SPRITZGUSSWERKZEUG**
MAGAZINE DEVICE AND METHOD FOR FEEDING INSERTS TO AN INJECTION MOULD
DISPOSITIF MAGAZINE ET PROCÉDÉ D'ALIMENTATION EN INSERTS D'UN OUTIL DE MOULAGE PAR INJECTION

(30) Priorität: 08.10.2019 DE 102019126941
(43) Veröffentlichungstag der Anmeldung: 14.04.2021
(73) Patentinhaber: Lisa Dräxlmaier GmbH, 84137 Vilsbiburg (DE)
(72) Erfinder: Esterbauer, Peter, 5282 Ranshofen (AT); Püschel, Stefan, 4982 Obernberg/Inn (AT); Peterlechner, Hermann, 5145 Neukirchen (AT); Greifeneder, Daniel, 4963 St. Peter am Hart (AT); Rainer, Liedtke, 5280 Braunau/Inn (AT)

(56) Entgegenhaltungen:
- CN-A- 107 672 113
- DE-A1-102011 121 680
- GB-A- 2 032 334
- US-A- 3 727 771

## Beschreibung

### Technisches Gebiet

Die vorliegende Erfindung betrifft eine Magazinvorrichtung und ein Verfahren zum Zuführen von Einlegeteilen in ein Spritzgusswerkzeug.

### Stand der Technik

Es ist an sich bekannt, bei Spritzgussteilen Einlegeteile zu integrieren. Dafür werden solche Einlegeteile im Bereich einer Kavität eines Spritzgusswerkzeugs angeordnet und mit einem Kunststoff zumindest teilweise umspritzt. Derartige Einlegeteile können beispielsweise als mechanische Schnittstellen dienen, an denen andere Bauteile mit dem betreffenden Spritzgussteil verbunden werden können. So können Einlegeteile z.B. in Form von Schrauben, Bolzen, Stiften, Passstiften, Buchsen, Bundbuchsen, Gewindebuchsen, Muttern und dergleichen während der Herstellung der Spritzgussteile in diese integriert werden.

Die Bereitstellung solcher Einlegeteile bei einem Spritzgusswerkzeug kann sich mitunter relativ aufwendig gestalten. Dies kann mit einer aufwendigen und kostenintensiven Peripherie, langen Zykluszeiten und einem relativ hohen Platzbedarf bei einer Spritzgussmaschine miteinhergehen.

### Beschreibung der Erfindung

Es ist daher die Aufgabe der Erfindung, eine Lösung bereitzustellen, mittels welcher auf besonders einfache Weise eine Vielzahl von Einlegeteilen bei einem Spritzgusswerkzeug bereitgestellt werden kann, sodass die jeweiligen Einlegeteile unter Ausbildung eines Spritgussteils mittels des Spritzgusswerkzeugs umspritzt werden können.

Diese Aufgabe wird durch eine Magazinvorrichtung und ein Verfahren zum Zuführen von Einlegeteilen in ein Spritzgusswerkzeug mit den Merkmalen der unabhängigen Ansprüche gelöst. Weitere mögliche Ausgestaltungen der Erfindung sind insbesondere in den abhängigen Ansprüchen angegeben.

Die erfindungsgemäße Magazinvorrichtung zum Zuführen von Einlegeteilen in ein Spritzgusswerkzeug umfasst ein Trommelmagazin mit mehreren an unterschiedlichen Umfangspositionen des Trommelmagazins angeordneten Magazinschächten, die sich in axialer Richtung des Trommelmagazins erstrecken und dazu ausgelegt sind, die Einlegeteile in einer jeweiligen Reihe übereinander angeordnet aufzunehmen. Bei den Einlegeteilen kann es sich um verschiedenste Arten von Einlegeteilen handeln. Beispielsweise kann es sich bei den Einlegeteilen um Schrauben, Bolzen, Stifte, Passstifte, Buchsen, Bundbuchsen, Gewindebuchsen, Muttern und dergleichen handeln. Die Magazinschächte können insbesondere bezogen auf die radiale Richtung des Trommelmagazins in einem äußeren Bereich über den Umfang des Trommelmagazins verteilt angeordnet sein. Bei bestimmungsgemäßer Anordnung des Trommelmagazins am Spritzgusswerkzeug verlaufen die Magazinschächte zumindest im Wesentlichen in vertikaler Richtung.

Die Magazinvorrichtung umfasst des Weiteren eine Magazinaufnahme zum Aufnehmen des Trommelmagazins, wobei die Magazinaufnahme eine Durchgangsöffnung aufweist, die bei bestimmungsgemäßer Anordnung am Spritzgusswerkzeug z.B. in einen Zuführkanal des Spritzgusswerkzeugs münden kann. Bei bestimmungsgemäßer Anordnung der Magazinaufnahme am Spritzgusswerkzeug kann die Durchgangsöffnung zumindest im Wesentlichen in vertikaler Richtung verlaufen und in den besagten Zuführkanal des Spritzgusswerkzeugs münden. Der Zuführkanal des Spritzgusswerkzeugs kann seinerseits zumindest im Wesentlichen in vertikaler Richtung verlaufen. Vom Trommelmagazin in die Durchgangsöffnung gelangende Einlegeteile können also rein schwerkraftbedingt die Durchgangsöffnung passieren und ebenfalls den Zuführkanal des Spritzgusswerkzeugs passieren. So können die vereinzelt bereitgestellten Einlegeteile innerhalb des Spritzgusswerkzeugs mittels einer Positioniereinheit des Spritzgusswerkzeugs in einer Spritzgussposition im Bereich einer Kavität des Spritzgusswerkzeugs angeordnet werden. Danach kann das jeweilige Einlegeteil unter Ausbildung eines Spritzgussteils mit einem Kunststoff umspritzt werden. Mittels des Trommelmagazins ist es insbesondere möglich, eine Vielzahl der Einlegeteile bereitzustellen, zu vereinzeln und somit einzeln dem betreffenden Spritzgusswerkzeug zuzuführen. Das Trommelmagazin kann besonders bauraumsparend direkt am Spritzgusswerkzeug montiert werden. Eine aufwendige und große Peripherie zum Zuführen der Einlegeteile kann bei Verwendung der erfindungsgemäßen Magazinvorrichtung am betreffenden Spritzgusswerkzeug entfallen.

Die Magazinvorrichtung muss aber nicht unbedingt oberhalb vom Zuführkanal der Werkzeughälfte angeordnet werden. Beispielsweise ist es auch möglich, die Magazinvorrichtung seitlich an der Werkzeughälfte aufzunehmen, wobei die durch die Durchgangsöffnung fallenden Einlegeteile z.B. mittels Druckluft direkt oder indirekt dem Zuführkanal zugeführt werden können. Zum Beispiel ist es auch möglich, dass oberhalb vom Zuführkanal ein Stangenmagazin angeordnet werden kann. Mittels der Magazinvorrichtung vereinzelte Einlegeteile, die durch die Durchgangsöffnung fallen, können z.B. mittels Druckluft über einen Schlauch zum Stangenmagazin befördert werden. Auch ist es z.B. möglich, die Magazinvorrichtung überhaupt nicht direkt an der Werkzeughälfte zu montieren. Stattdessen kann die Magazinvorrichtung z.B. auch fernab der Werkzeughälfte beispielsweise an anderer geeigneter Stelle an der betreffenden Spritzgussmaschine aufgenommen werden. Die mittels der Magazinvorrichtung vereinzelten Einlegeteile können dann z.B. wiederum über einen Schlauch und mittels Druckluft - direkt oder indirekt - der Werkzeughälfte zugeführt werden. Letzteres kann z.B. wiederum bedeuten, dass die vereinzelten Einlegeteile einem oberhalb von der Zuführöffnung angeordneten Stangenmagazin zugeführt werden. Auch ist es möglich, die mittels der Magazinvorrichtung vereinzelten Einlegeteile direkt ins Innere der Werkzeughälfte, z.B. wiederum mittels Druckluft, zu befördern.

Die Magazinvorrichtung umfasst zudem eine Rotiereinrichtung zum Rotieren des Trommelmagazins, welche dazu ausgelegt ist, bei an der Magazinaufnahme angeordnetem Trommelmagazin die jeweiligen Magazinschächte in eine Zuführstellung zu drehen, in der die jeweiligen Magazinschächte oberhalb von der Durchgangsöffnung angeordnet sind. Sollte also eines der Magazinschächte leer sein, da sämtliche darin zuvor angeordneten Einlegeteile vereinzelt und dem Spritzgusswerkzeug zugeführt worden sind, ist es mittels der Rotiereinrichtung möglich, das Trommelmagazin einfach um eine Teilung weiter zu drehen, sodass der in Umfangsrichtung nächste noch befüllte Magazinschacht oberhalb von der Durchgangsöffnung angeordnet werden kann. Dadurch ist es möglich, das betreffende Spritzgusswerkzeug mehr oder minder unterbrechungsfrei mit einer Vielzahl von Einlegeteilen zu versorgen.

Des Weiteren umfasst die Magazinvorrichtung eine Vereinzelungseinrichtung, welche dazu ausgelegt ist, die jeweiligen in den Magazinschächten angeordneten Einlegeteile zu vereinzeln und in Richtung der Durchgangsöffnung der Magazinaufnahme freizugeben. Die Vereinzelungseinrichtung kann also dafür sorgen, dass die in den jeweiligen Magazinschächten angeordneten Einlegeteile einzeln in Richtung der Durchgangsöffnung der Magazinaufnahme und somit auch einzeln in Richtung des Spritzgusswerkzeugs freigegeben werden. So ist es insbesondere möglich, abgestimmt auf die betreffende Taktzeit des Spritzgusswerkzeugs, an welchem die Magazinvorrichtung montiert ist, die Vielzahl der Einlegeteile immer zu einem rechtzeitigen Zeitpunkt vereinzelt dem Spritzgusswerkzeug bereitzustellen.

Die Ansteuerung der Rotiereinrichtung und/oder der Vereinzelungseinrichtung kann mittels einer Steuerung erfolgen, welche zum Spritzgusswerkzeug gehört. So ist es auf einfache und zuverlässige Weise möglich, unter Berücksichtigung weiterer Parameter des Spritzgusswerkzeugs abgestimmt auf einen Spritzgussvorgang die Einlegeteile immer rechtzeitig vereinzelt im Inneren des Spritzgusswerkzeugs bereitzustellen. Alternativ ist es auch möglich, dass die Magazinvorrichtung selbst über eine Steuerung verfügt, welche dazu ausgelegt ist, insbesondere in Kommunikation mit dem betreffenden Spritzgusswerkzeug, die Rotiereinrichtung und die Vereinzelungseinrichtung so anzusteuern, dass abgestimmt auf jeweilige Spritzgussvorgänge die mittels des Trommelmagazins aufgenommenen Einlegeteile immer rechtzeitig vereinzelt und dem Spritzgusswerkzeug bereitgestellt werden.

Die Magazinvorrichtung ist insbesondere mobil einsetzbar, also nicht an ein bestimmtes Spritzgusswerkzeug gebunden. Mittels der erfindungsgemäßen Magazinvorrichtung ist es darüber hinaus möglich, die Einlegeteile besonders schnell und zuverlässig dem betreffenden Spritzgusswerkzeug zuzuführen. Dadurch können besonders kurze Zykluszeiten bei dem betreffenden Spritzgusswerkzeug beziehungsweise der betreffenden Spritzgussmaschine erzielt werden. Eine ansonsten gegebenenfalls erforderliche aufwendige Peripherie zum Bereitstellen und Zuführen der Einlegeteile kann bei der Verwendung der erfindungsgemäßen Magazinvorrichtung entfallen.

Eine mögliche Ausgestaltung der Erfindung sieht vor, dass die Magazinvorrichtung eine Sensoreinrichtung aufweist, welche dazu ausgelegt ist, einen Füllstand der Magazinschächte hinsichtlich der aufgenommenen Einlegeteile zu erfassen, und/oder zu erfassen, ob und/oder wann eines der Einlegeteile mittels der Vereinzelungseinrichtung in Richtung der Durchgangsöffnung der Magazinaufnahme freigegeben wurde. So ist es jederzeit möglich, zu überwachen, wie es um den Füllstand des Trommelmagazins und insbesondere der jeweiligen Magazinschächte bezüglich der Einlegeteile bestellt ist. Wann immer einer der Magazinschächte, welche gerade zur Bereitstellung der Einlegeteile verwendet wird, leer sein sollte, kann die Rotiereinrichtung angesteuert werden, um das Trommelmagazin um eine Teilung weiterzudrehen, sodass der in Umfangsrichtung nächste noch befüllte Magazinschacht oberhalb von der Durchgangsöffnung der Magazinaufnahme angeordnet werden kann. Alternativ oder zusätzlich ist es mittels der Sensoreinrichtung auch möglich, zu erfassen, ob und/oder wann eines der jeweiligen Einlegeteile mittels der Vereinzelungseinrichtung in Richtung der Durchgangsöffnung der Magazinaufnahme freigegeben wurde. Beispielsweise wäre es auch möglich, zu erfassen, ob sich innerhalb der Durchgangsöffnung eines der Einlegeteile zum Beispiel verklemmt hat, sodass die Durchgangsöffnung nicht mehr passierbar ist. Diese Information kann beispielsweise dafür genutzt werden, einen Spritzgussprozess zu unterbrechen. Zudem ist es auch möglich, in Kenntnis, wann eines der Einlegeteile mittels der Vereinzelungseinrichtung in Richtung der Durchgangsöffnung der Magazinaufnahme freigegeben wurde, den Spritzgussprozess und insbesondere die Positionierung des betreffenden Einlegeteils im Bereich einer Kavität des Spritzgusswerkzeugs rechtzeitig anzusteuern beziehungsweise zu initiieren. Besagte Sensoreinrichtung kann beispielsweise mit der bereits erwähnten Steuerung des Spritzgusswerkzeugs kommunizieren. So kann die Steuerung des Spritzgusswerkzeugs in der bereits beschriebenen Weise sowohl die Rotiereinrichtung als auch die Vereinzelungseinrichtung ansteuern.

Eine weitere mögliche Ausgestaltung der Erfindung sieht vor, dass die Rotiereinrichtung eine an der Magazinaufnahme gelagerte Welle zum Aufnehmen und Rotieren des Trommelmagazins aufweist. Das Trommelmagazin kann beispielsweise von oben auf die Welle aufgesteckt werden, wobei zwischen der Welle und dem Trommelmagazin beispielsweise eine formschlüssige Verbindung hergestellt werden kann. Mittels der Welle ist es auf einfache und zuverlässige Weise möglich, das Trommelmagazin in der beschriebenen Weise zu rotieren.

Gemäß einer weiteren möglichen Ausgestaltung der Erfindung ist es vorgesehen, dass die Welle einen Rastmechanismus zum Verrasten des auf die Welle aufgesteckten Trommelmagazins aufweist. So kann jederzeit zuverlässig sichergestellt werden, dass die Welle und das Trommelmagazin fest miteinander verbunden bleiben.

In weiterer möglicher Ausgestaltung der Erfindung ist es vorgesehen, dass die Rotiereinrichtung eine translatorisch zwischen einer eingefahrenen und einer ausgefahrenen Stellung bewegbare Drehbetätigung aufweist, die bei einer Bewegung von der eingefahrenen in die ausgefahrene Stellung in eine Verzahnung der Welle eingreift und die Welle um einen Drehwinkel rotiert, der jeweiligen Abständen der Magazinschächte in Umfangsrichtung entspricht. Bei der Drehbetätigung kann es sich beispielsweise um eine Art Stößel oder dergleichen handeln, der in translatorischer Richtung zwischen der ausgefahrenen Stellung und der eingefahrenen Stellung hin und her bewegt werden kann. Eine Hubbewegung von der eingefahrenen in die ausgefahrene Stellung kann die Welle um den Drehwinkel rotieren, der den jeweiligen Abständen der Magazinschächte in Umfangsrichtung entspricht. Auf diese Weise ist es ganz einfach und kontrolliert möglich, das Trommelmagazin immer nur so weit weiterzudrehen, dass der in Umfangsrichtung nächste Magazinschacht oberhalb von der Durchgangsöffnung der Magazinaufnahme positioniert wird.

Eine weitere mögliche Ausgestaltung der Erfindung sieht vor, dass die Rotiereinrichtung einen Pneumatikzylinder aufweist, welcher dazu ausgelegt ist, die Drehbetätigung zwischen der eingefahrenen und ausgefahrenen Stellung zu bewegen. Auf diese Weise ist es ganz einfach möglich, über einen entsprechenden Hub des Pneumatikzylinders die Drehbetätigung zwischen der eingefahrenen und ausgefahrenen Stellung zu bewegen. Ein zu weites Ausfahren der Drehbetätigung kann dadurch zuverlässig ausgeschlossen werden. Somit kann auch ausgeschlossen werden, dass mittels der Rotiereinrichtung das Trommelmagazin in eine Drehstellung bewegt wird, bei der eines der Magazinschächte nicht exakt oberhalb von der Durchgangsöffnung angeordnet ist.

Gemäß einer weiteren möglichen Ausgestaltung der Erfindung ist es vorgesehen, dass die Drehbetätigung um eine parallel zur Rotationsachse der Welle verlaufende Achse verschwenkbar gelagert ist, wobei die Rotiereinrichtung eine Federeinrichtung aufweist, die eine Federkraft in Richtung der Welle auf die Drehbetätigung ausübt. Die Verzahnung der Welle ist so geformt, dass beim Ausfahren der Drehbetätigung diese in Eingriff mit einer der Eingriffsflächen jeweiliger Zähne der Verzahnung gelangt und beim Einfahren an einer von den Eingriffsflächen abgewandten Rückseite der Zähne abgleitet und entgegen der Federkraft von der Verzahnung von der Welle weggeschwenkt wird. So kann sichergestellt werden, dass die Drehbetätigung über einen verhältnismäßig großen Hubweg die Welle rotieren kann. Denn durch die verschwenkbare Lagerung der Drehbetätigung kann diese über einen relativ großen Winkelbereich hinweg an einem jeweiligen Bereich der Zähne der Verzahnung anliegen. Die Federeinrichtung sorgt dabei dafür, dass die Drehbetätigung immer in Anlage mit der Verzahnung bleibt. Beim Ausfahren der Drehbetätigung gelangt diese in Anlage mit einer der besagten Eingriffsflächen jeweiliger Zähne der Verzahnung. Diese Eingriffsflächen können sich beispielsweise rein in radialer Richtung erstrecken. Beim Einfahren der Drehbetätigung von ihrer ausgefahrenen Stellung in ihre eingefahrene Stellung wird diese zwar weiterhin von der Federeinrichtung an die Welle herangedrückt, jedoch sorgen die von den jeweiligen Eingriffsflächen abgewandten Rückseiten der Zähne dafür, dass die Drehbetätigung beim Einfahren die Welle diese nicht wieder zurückdreht. Besagte Rückseiten der Zähne können so schräg angeordnet sein, dass die Drehbetätigung beim Einfahren einfach an diesen Rückseiten abgleitet, und zwar ohne die Welle dabei wieder in entgegengesetzter Richtung zu verdrehen.

Gemäß einer alternativen möglichen Ausgestaltung der Erfindung ist es vorgesehen, dass die Rotiereinrichtung einen Motor, insbesondere einen Schrittmotor, aufweist, welcher dazu ausgelegt ist, die Welle um einen Drehwinkel zu rotieren, der jeweiligen Abständen der Magazinschächte in Umfangsrichtung entspricht. So ist es auf zuverlässige und reproduzierbare Weise möglich, bei Bedarf das Trommelmagazin immer nur so weit zu verdrehen, dass immer einer der Magazinschächte exakt oberhalb von der Durchgangsöffnung der Magazinaufnahme angeordnet ist. Beispielsweise kann es sich dabei um einen Schrittmotor handeln, der dazu ausgelegt ist, die Welle zu rotieren. Andere Bauformen sind aber auch möglich, welche dazu ausgelegt sind, die Welle exakt um den besagten Drehwinkel zu rotieren.

Eine weitere mögliche Ausgestaltung der Erfindung sieht vor, dass die Vereinzelungseinrichtung je Magazinschacht eine Vereinzelungseinheit mit einem unteren Sperrstift und einem oberen Sperrstift sowie mit einer Vereinzelungskontur aufweist. Die Sperrstifte sind jeweils zwischen einer in den jeweiligen Magazinschacht ragenden Sperrstellung und einer nicht in den Magazinschacht ragenden Freigabestellung bewegbar. Die Vereinzelungskonturen sind in axialer Richtung des Trommelmagazins zwischen einer unteren Endlage und einer oberen Endlage bewegbar und dazu ausgelegt, bei einer Bewegung von der unteren in die obere Endlage die Bewegungen der Sperrstifte so zu steuern, dass die jeweiligen an unterster Stelle in den Magazinschächten angeordneten Einlegeteile vereinzelt nach unten aus den Magazinschächten in Richtung der Durchgangsöffnung der Magazinaufnahme freigegeben werden. Jedem Magazinschacht ist also eine dieser Vereinzelungseinheiten zugeordnet. Die jeweiligen Vereinzelungskonturen können in axialer Richtung des Trommelmagazins nach oben und nach unten bewegt werden. Durch die Formgebung der Vereinzelungskonturen werden die jeweiligen oberen und unteren Sperrstifte seitlich, also quer zur axialen Richtung des Trommelmagazins, in den jeweiligen Magazinschacht hinein beziehungswiese aus diesem heraus bewegt. Bei einer Bewegung der jeweiligen Vereinzelungskontur von der unteren Endlage in die obere Endlage wird das jeweils an der untersten Stelle im betreffenden Magazinschacht angeordnete Einlegeteil freigegeben, sodass es schwerkraftbedingt nach unten aus dem Trommelmagazin beziehungsweise dem betreffenden Magazinschacht fallen kann. In der oberen Endlage wird zudem durch das Zusammenspiel zwischen den jeweiligen Vereinzelungskonturen und Sperrstiften sichergestellt, dass das zuvor an zweitunterster Stelle angeordnete Einlegeteil zuverlässig im betreffenden Magazinschacht verbleiben kann. Durch Herabbewegen der Vereinzelungskontur wiederum in die untere Endlage wird das dann an unterster Stelle im Magazin angeordnete Einlegeteil sicher fixiert. Mittels der Vereinzelungseinheiten ist es so auf zuverlässige Weise möglich, die in den jeweiligen Magazinschächten aufgenommenen Einlegeteile einzeln nach unten aus den Magazinschächten fallen zu lassen.

Eine weitere mögliche Ausgestaltung der Erfindung sieht vor, dass die Sperrstifte mittels einer jeweiligen Feder mit einer Federkraft in Richtung der Freigabestellung beaufschlagt werden. Die jeweilige Vereinzelungskontur zwingt in ihrer unterer Endlage den zugehörigen unteren Sperrstift in die Sperrstellung, sodass das jeweilige in der untersten Stellung im Magazinschacht angeordnete Einlegeteil daran gehindert wird, nach unten aus dem Magazinschacht zu fallen, wobei die Vereinzelungskontur eine durch die Federkraft bedingte Bewegung des zugehörigen oberen Sperrstifts in die Freigabestellung freigibt, solange sich die jeweilige Vereinzelungskontur in ihrer unteren Endlage befindet. In der unteren Endlage wird also nur das an unterster Stelle angeordnete Einlegeteil daran gehindert, nach unten aus dem Magazin zu fallen. Da die Einlegeteile in den jeweiligen Magazinschächten in einer Reihe übereinander angeordnet sind, kann dadurch zuverlässig sichergestellt werden, dass die Einlegeteile nicht aus den jeweiligen Magazinschächten nach unten fallen können. Die jeweilige Vereinzelungskontur gibt in ihrer oberen Endlage eine durch die Federkraft bedingte Bewegung des zugehörigen unteren Sperrstifts in die Freigabestellung frei, sodass das jeweilige in der untersten Stellung im Magazinschacht angeordnete Einlegeteil nach unten aus dem Magazinschacht fallen kann, wobei die Vereinzelungskontur den zugehörigen oberen Sperrstift in die Sperrstellung zwingt, sodass das jeweilige in der zweituntersten Stellung im Magazinschacht angeordnete Einlegeteil daran gehindert wird, nach unten aus dem Magazinschacht zu fallen. Mit Erreichen der oberen Endlage sorgt also die Vereinzelungskontur im Zusammenspiel mit den jeweils oberen und unteren Sperrstiften dafür, dass einerseits das bis dahin an unterster Stelle angeordnete Einlegeteil aus dem Magazinschacht fallen kann, wobei gleichzeitig sichergestellt wird, dass das bis dato zweitunterste Einlegeteil nicht aus dem Magazinschacht fallen kann. Dadurch, dass die jeweiligen Sperrstifte mit der jeweiligen Feder in Richtung ihrer Freigabestellung beaufschlagt werden, wird im Zusammenspiel mit der Formgebung der Vereinzelungskontur ein spielfreier Sitz der Sperrstifte an der Vereinzelungskontur sichergestellt. So kann in jeder Stellung der Vereinzelungskontur sichergestellt werden, dass die Sperrstifte auch ihre jeweils erforderliche Lage einnehmen.

In weiterer möglicher Ausgestaltung der Erfindung ist es vorgesehen, dass die jeweiligen Vereinzelungskonturen bezüglich des zugeordneten Magazinschachts eine obere zurückversetzte Vertiefung und eine untere zurückversetzte Vertiefung sowie dazwischen einen hervorstehenden Mittenbereich aufweisen. In der unteren Endlage der jeweiligen Vereinzelungskontur ist der zugehörige untere Sperrstift auf Höhe des hervorstehenden Mittenbereichs der Vereinzelungskontur angeordnet, wodurch die Vereinzelungskontur mit ihrem hervorstehenden Mittenbereich diesen unteren Sperrstift in seine Sperrstellung zwingt. Der zugehörige obere Sperrstift ist in der unteren Lage der jeweiligen Vereinzelungskontur auf Höhe der oberen Vertiefung der Vereinzelungskontur angeordnet, wodurch die federkraftbedingte Bewegung des oberen Sperrstifts in die Freigabestellung freigegeben ist. In der oberen Endlage der jeweiligen Vereinzelungskontur ist der zugehörige untere Sperrstift auf Höhe der unteren Vertiefung der Vereinzelungskontur angeordnet, sodass die federkraftbedingte Bewegung des unteren Sperrstifts in die Freigabestellung durch die Vereinzelungskontur freigegeben ist. Der zugehörige obere Sperrstift ist in der oberen Endlage der betreffenden Vereinzelungskontur auf Höhe des hervorstehenden Mittenbereichs der Vereinzelungskontur angeordnet und wird dadurch in die Sperrstellung gezwungen. Die jeweiligen Vereinzelungskonturen können beispielsweise mehr oder weniger stiftförmig ausgebildet sein, wobei die jeweiligen unteren und oberen zurückversetzten Vertiefungen einen Bereich geringen Querschnitts darstellen können, wobei der hervorstehende Mittenbereich als eine Art bauchiger Mittenbereich ausgebildet sein kann. Wesentlich bei den Vereinzelungskonturen ist, dass diese in Richtung des betreffenden Magazinschachts die besagten zurückversetzten Vertiefungen und den dazwischen angeordneten hervorstehenden Mittenbereich aufweisen. Auf diese Weise wird eine zuverlässige Steuerung der Bewegung der oberen und unteren Sperrstifte in Abhängigkeit von der jeweiligen Lage der Vereinzelungskonturen sichergestellt. So können die Vereinzelungskonturen im Zusammenspiel mit den ihnen zugeordneten oberen und unteren Sperrstiften dafür sorgen, die in den Magazinschächten aufgenommenen Einlegeteile zuverlässig zu fixieren beziehungsweise bei Bedarf nach unten aus den Magazinschächten vereinzelt freizugeben.

Eine alternative mögliche Ausgestaltung der Erfindung sieht vor, dass die jeweiligen Vereinzelungskonturen eine Führungsbahn aufweisen, die bezüglich des zugeordneten Magazinschachts einen oberen zurückversetzten Abschnitt und einen unteren zurückversetzten Abschnitt sowie dazwischen einen hervorstehenden Mittenabschnitt aufweisen. Die der jeweiligen Vereinzelungskontur zugeordneten oberen und unteren Sperrstifte greifen in die zugehörige Führungsbahn ein. In der unteren Endlage der jeweiligen Vereinzelungskontur ist der zugehörige untere Sperrstift auf Höhe des Mittenabschnitts der Führungsbahn angeordnet und wird durch diese in die Sperrstellung gezwungen, wobei der zugehörige obere Sperrstift auf Höhe des oberen zurückversetzten Abschnitts der Führungsbahn angeordnet ist und durch diese in die Freigabestellung gezwungen wird. In der oberen Endlage der jeweiligen Vereinzelungskontur ist der zugehörige untere Sperrstift auf Höhe des unteren zurückversetzten Abschnitts der Führungsbahn angeordnet und wird dadurch in die Freigabestellung gezwungen, wobei der zugehörige obere Sperrstift auf Höhe des Mittenabschnitts der Führungsbahn angeordnet ist und durch diese in die Sperrstellung gezwungen wird. Bei dieser möglichen Ausgestaltung ist keine Federbelastung der Sperrstifte erforderlich. Beim Auf- und Abbewegen der jeweiligen Vereinzelungskonturen sorgen die jeweiligen Führungsbahnen dafür, dass die in axialer Richtung fixierten Sperrstifte in den Magazinschacht hineinbewegt beziehungsweise aus diesem herausbewegt werden. Auch bei dieser möglichen Ausgestaltung der Vereinzelungskonturen und Sperrstifte ist es auf zuverlässige Weise möglich, dafür zu sorgen, dass die in den jeweiligen Magazinschächten aufgenommenen Einlegeteile zuverlässig in den Magazinschächten fixiert und bei Bedarf vereinzelt aus den Magazinschächten nach unten entlassen werden können.

Gemäß einer weiteren möglichen Ausgestaltung der Erfindung ist es vorgesehen, dass die Vereinzelungskonturen so geformt und zu den diesen zugeordneten Sperrstiften angeordnet sind, dass bei einer Bewegung von der unteren in die obere Endlage der jeweilige obere Sperrstift zuerst seine Sperrstellung einnimmt, bevor der untere Sperrstift seine Freigabestellung einnimmt. So kann zuverlässig sichergestellt werden, dass niemals zwei der Einlegeteile aus den Magazinschächten nach unten entlassen werden. Noch bevor das jeweilige an unterster Stelle angeordnete Einlegeteil nach unten aus dem betreffenden Magazinschacht freigegeben wird, wird also das bis dato an zweitunterster Stelle angeordnete Einlegeteil fixiert. Bei der Bewegung der jeweiligen Vereinzelungskontur von der untere in die obere Endlage kann es beispielsweise vorgesehen sein, dass der obere und der untere Sperrstift zwischendurch so weit ausgefahren werden, dass sowohl das an unterster als auch das an zweitunterster Stelle angeordnete Einlegeteil fixiert wird. Mit Erreichen der oberen Endlage der Vereinzelungskontur wird dann das bis dahin an unterster Stelle angeordnete Einlegteil freigeben und das bis dato an zweitunterster Stelle angeordnete Einlegeteil bereits zuverlässig fixiert.

Eine weitere mögliche Ausgestaltung der Erfindung sieht vor, dass die Vereinzelungskonturen so geformt und zu den diesen zugeordneten Sperrstiften angeordnet sind, dass bei einer Bewegung von der oberen in die untere Endlage der jeweilige untere Sperrstift zuerst seine Sperrstellung einnimmt, bevor der obere Sperrstift seine Freigabestellung einnimmt. Die Vereinzelungskontur kann im Zusammenspiel mit den diesen zugeordneten Sperrstiften also jederzeit zuverlässig auch bei einer Bewegung von der oberen in die untere Endlage dafür sorgen, dass das dann an unterster Stelle angeordnete Einlegeteil auf keinen Fall aus dem betreffenden Magazinschacht nach unten fallen kann.

Eine weitere mögliche Ausgestaltung der Erfindung sieht vor, dass die Vereinzelungskonturen mittels einer jeweiligen Rückstellfeder beaufschlagt werden, die eine Federkraft in Richtung der unteren Endstellung auf die Vereinzelungskonturen ausübt. So kann jederzeit ein spielfreier Sitz der betreffenden Vereinzelungskonturen in ihrer jeweiligen Lage sichergestellt werden. Wird zudem keine Kraft auf die Vereinzelungskonturen ausgeübt, so gelangen diese automatisch in ihre untere Endstellung, in der die jeweiligen Vereinzelungskonturen mit den ihnen zugeordneten Sperrstiften dafür sorgen, dass das zuunterst angeordnete Einlegeteil nicht aus dem betreffenden Magazinschacht nach unten herausfallen kann.

In weiterer möglicher Ausgestaltung der Erfindung ist es vorgesehen, dass die Magazinvorrichtung einen Aktor, insbesondere einen Pneumatikzylinder, aufweist, welcher dazu ausgelegt ist, die jeweiligen Vereinzelungskonturen von ihrer unteren in ihre obere Endstellung zu bewegen, wenn der zur jeweiligen Vereinzelungseinheit gehörende Magazinschacht oberhalb von der Durchgangsöffnung der Magazinaufnahme angeordnet ist. Insbesondere kann es vorgesehen sein, dass die Magazinvorrichtung nur einen dieser Aktoren aufweist. Denn die Vereinzelung der Einlegeteile aus den betreffenden Magazinschächten ist nur dann überhaupt erforderlich, wenn einer der betreffenden Magazinschächte auch oberhalb von der Durchgangsöffnung der Magazinaufnahme angeordnet ist. So können Bauteile bei der Magazinvorrichtung eingespart werden. Zudem ist es mittels des besagten Aktors auf zuverlässige Weise möglich, die jeweiligen Vereinzelungskonturen zwischen ihrer unteren und ihrer oberen Endstellung zu bewegen. Falls die Vereinzelungskonturen mit der jeweiligen Rückstellfeder beaufschlagt werden, die eine Federkraft in Richtung der unteren Endstellung auf die Vereinzelungskonturen ausüben, so muss der Aktor lediglich dazu in der Lage sein, die jeweiligen Vereinzelungskonturen von unten nach oben also von ihrer unteren in ihre obere Endstellung zu bewegen. Wenn der Aktor keine Kraft ausübt, sorgt eine jeweilige Rückstellfeder dafür, dass die Vereinzelungskonturen automatisch wieder ihre untere Endstellung einnehmen.

In weiterer möglicher Ausgestaltung der Erfindung ist es vorgesehen, dass die Vereinzelungseinrichtung zumindest teilweise in einem Magazineinsatz angeordnet ist, der in einem unteren Innenbereich des Trommelmagazins montierbar ist. Die gesamte Vereinzelungseinrichtung oder zumindest ein Teil von ihr kann so besonders kompakt im besagten Magazineinsatz untergebracht werden. Zudem ist es möglich, die Vereinzelungskonturen und die jeweiligen Sperrstifte besonders exakt im Bereich der jeweiligen Magazinschächte anzuordnen, wenn die Vereinzelungseinrichtung im besagten Magazineinsatz als ganze Baugruppe angeordnet ist. Beispielsweise ist es auch möglich, dass der Magazineinsatz eine Öffnung aufweist, in welche die besagte Welle eingeführt werden kann. Der Magazineinsatz mit der darin integrierten Vereinzelungseinrichtung kann also einerseits im Innenbereich des Trommelmagazins fest montiert werden. Zudem kann bei montiertem beziehungsweise eingesetztem Magazineinsatz das Trommelmagazin mitsamt dem Magazineinsatz über die besagte Welle gestülpt werden, welche dazu dient, in der bereits beschriebenen Weise das Trommelmagazin zu rotieren.

Gemäß einer weiteren möglichen Ausgestaltung der Erfindung ist es vorgesehen, dass die Magazinvorrichtung eine Magazinabdeckung zum Verschließen einer Oberseite des Trommelmagazins aufweist, wobei die Magazinabdeckung zwischen einer die Magazinschächte freigebenden Befüllstellung und einer die Magazinschächte verschließenden Verschlussstellung verdrehbar ist. Die Magazinabdeckung muss also zum Befüllen der Magazinschächte überhaupt nicht abgenommen werden. Die Magazinabdeckung muss lediglich in ihre Befüllstellung verdreht werden, in der jeweilige Öffnungen in der Magazinabdeckung die jeweiligen Magazinschächte freigeben. Nach Befüllen der jeweiligen Magazinschächte kann die Magazinabdeckung einfach in ihre Verschlussstellung verdreht werden, in der die Magazinabdeckung zuverlässig sicherstellen kann, dass die aufgenommenen Einlegeteile nicht über die Oberseite des Trommelmagazins herausfallen können.

Eine weitere mögliche Ausgestaltung der Erfindung sieht vor, dass die Magazinabdeckung so viele Öffnungen wie das Trommelmagazin Magazinschächte aufweist, wobei die Öffnungen so geformt sind, dass die Einlegeteile nur in einer bestimmungsgemäßen Anordnung durch die Öffnungen in die Magazinschächte befüllbar sind, wenn die Magazinabdeckung in ihrer Befüllstellung abgedeckt ist. Die Öffnungen in der Magazinabdeckung können also als eine Art Grenzleere verwendet werden, mittels welchen verhindert werden kann, dass bezüglich ihrer Formgebung falsche Einlegeteile ins Trommelmagazin eingesetzt werden. Zudem ist es mittels der Magazinabdeckung möglich, auf einfache Weise dafür zu sorgen, dass die Einlegeteile nur in ihrer bestimmungsgemäßen Anordnung durch die Öffnungen in die Magazinschächte eingefüllt werden können. So kann ganz einfach sichergestellt werden, dass die Einlegeteile auch nur so innerhalb der Magazinschächte angeordnet beziehungsweise ausgerichtet sind, wie es vorgesehen ist.

Bei dem erfindungsgemäßen Verfahren zum Betreiben der erfindungsgemäßen Magazinvorrichtung oder einer möglichen Ausgestaltung der Magazinvorrichtung ist die Magazinvorrichtung an einem Spritzgusswerkzeug angeordnet, das dazu ausgelegt ist, ein Einlegeteil im Bereich einer Kavität des Spritzgusswerkzeugs zu positionieren und unter Ausbildung eines Spritzgussteils zu umspritzen. Zunächst wird eines der Magazinschächte des Trommelmagazins in der Zuführstellung positioniert. Die Einlegeteile, welche in dem Magazin angeordnet sind, das in der Zuführstellung positioniert wurde, werden in Richtung der Durchgangsöffnung der Magazinaufnahme mittels der Vereinzelungseinrichtung vor einem jeweiligen Spritzgussvorgang des Spritzgusswerkzeugs vereinzelt und freigeben, sodass das jeweilige vereinzelte Einlegeteil in das Innere des Spritzgusswerkzeugs gelangt. Das Trommelmagazin wird mittels der Rotiereinrichtung rotiert, sobald sich in dem in der Zuführstellung positionierten Magazinschacht keine Einlegeteile mehr befinden, sodass der der in Umfangsrichtung nächste Magazinschacht in der Zuführstellung positioniert wird, wonach die dann in dem in der Zuführstellung positionierten Magazinschacht angeordneten Einlegeteile wiederum in Richtung der Durchgangsöffnung der Magazinaufnahme mittels der Vereinzelungseinrichtung vor einem jeweiligen Spritzgussvorgang des Spritzgusswerkzeugs vereinzelt und freigeben werden. So ist es möglich, eine Vielzahl der Einlegeteile dem betreffenden Spritzgusswerkzeug zuzuführen, an welchem die Magazinvorrichtung montiert ist. Sobald einer der Magazinschächte leer ist, sorgt die Rotiereinrichtung dafür, dass das Trommelmagazin um eine Teilung weitergedreht wird, welche einem Abstand der Magazinschächte in Umfangsrichtung des Trommelmagazins entspricht. So können nach und nach die jeweiligen Magazinschächte entleert werden, wobei währenddessen eine besonders schnelle und zuverlässige Speisung des Spritzgusswerkzeugs mit den betreffenden Einlegeteilen möglich ist. Sobald detektiert wird, dass das gesamte Trommelmagazin entleert wurde, kann eine Spritzgussmaschine, an welchem das Spritzgusswerkzeug montiert ist, gestoppt werden. Danach kann das Trommelmagazin entweder wieder mit Einlegeteilen bestückt werden oder alternativ kann ein weiteres solches Trommelmagazin am Spritzgusswerkzeug montiert werden, nachdem das zuvor montierte Trommelmagazin, was nun leer ist, abmontiert wurde. Danach können die Spritzgussvorgänge in der bereits beschriebenen Weise fortgeführt werden.

Gemäß einer möglichen Ausgestaltung des Verfahrens ist es vorgesehen, dass eine Steuerung der Spritzgussmaschine die Vereinzelungseinrichtung und/oder die Rotiereinrichtung in Abhängigkeit von mittels einer Sensoreinrichtung der Magazinvorrichtung bereitgestellten Sensorsignalen steuert, die einen Füllstand der Magazinschächte hinsichtlich der aufgenommene Einlegeteile und/oder einen Zeitpunkt charakterisieren, wann eines der Einlegeteile mittels der Vereinzelungseinrichtung in Richtung der Durchgangsöffnung in der Magazinaufnahme freigegeben wurde. Die Steuerung der Spritzgussmaschine kann also das Entleeren und Rotieren des Trommelmagazins steuern und dabei Sensorsignale der besagten Sensoreinrichtung der Magazinvorrichtung berücksichtigen. Das Trommelmagazin selbst beziehungsweise die Magazinvorrichtung braucht gar keine eigene Steuerung, da die Steuerung der Spritzgussmaschine die Ansteuerung der Magazinvorrichtung übernehmen kann. So ist es möglich, abgestimmt auf jeweilige Spritzgussvorgänge mittels der Steuerung der Spritzgussmaschine die Magazinvorrichtung passgenau anzusteuern, um jederzeit passgenau die jeweiligen Einlegeteile zu vereinzeln und dem Spritzgusswerkzeug zuzuführen.

Die Vereinzelungseinrichtung kann zumindest teilweise in einem Magazineinsatz angeordnet sein, der in einem unteren Innenbereich des Trommelmagazins montierbar ist.

Die Magazinvorrichtung kann eine Magazinabdeckung zum Verschließen einer Oberseite des Trommelmagazins aufweisen, wobei die Magazinabdeckung zwischen einer die Magazinschächte freigebenden Befüllstellung und einer die Magazinschächte verschließenden Verschlussstellung verdrehbar ist.

Die Magazinabdeckung kann so viele Öffnungen wie das Trommelmagazin Magazinschächte aufweisen, wobei die Öffnungen so geformt sind, dass die Einlegeteile nur in einer bestimmungsgemäßen Anordnung durch die Öffnungen in die Magazinschächte befüllbar sind, wenn die Magazinabdeckung in ihrer Befüllstellung angeordnet ist.

Weitere Vorteile, Merkmale und Einzelheiten der Erfindung können sich aus der nachfolgenden Beschreibung möglicher Ausführungsbeispiele sowie anhand der Zeichnung ergeben. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

### Kurze Figurenbeschreibung

Die Zeichnung zeigt in:
- Fig. 1: eine Perspektivansicht eines Spritzgusswerkzeugs mit einer daran angeordneten Magazinvorrichtung zum Bereitstellen von Einlegeteilen;
- Fig. 2: eine teiltransparente Perspektivansicht von schräg unten auf ein Trommelmagazin der Magazinvorrichtung;
- Fig. 3: eine Perspektivansicht einer Magazinaufnahme zum Aufnehmen des Trommelmagazins, wobei eine Welle zum Aufnehmen und Rotieren des Trommelmagazins an der Magazinaufnahme angeordnet ist;
- Fig. 4: eine Perspektivansicht der Magazinaufnahme ohne die Welle, wobei ein Blick auf eine Durchgangsöffnung in der Magazinaufnahme freigeben ist, durch welche die Einlegeteile in das Spritzgusswerkzeug gelangen können;
- Fig. 5: eine Perspektivansicht der zum Aufnehmen und Rotieren des Trommelmagazins ausgelegten Welle;
- Fig. 6: eine Perspektivansicht einer pneumatisch ansteuerbaren Drehbetätigung, mittels welcher die Welle rotierbar ist;
- Fig. 7: eine Perspektivansicht einer ersten Ausführungsform einer Vereinzelungseinheit, welche dazu ausgelegt ist, die im Trommelmagazin aufgenommenen Einlegeteile zu vereinzeln;
- Fig. 8: eine Perspektivansicht eines Pneumatikzylinders, welcher zum Betätigen der Vereinzelungseinheit dient;
- Fig. 9: eine Perspektivansicht der Magazinaufnahme, wobei die zum Rotieren der Welle dienende Drehbetätigung in einer eingefahrenen Stellung angeordnet ist;
- Fig. 10: eine Perspektivansicht der Magazinaufnahme, wobei die zum Rotieren der Welle dienende Drehbetätigung in einer ausgefahrenen Stellung angeordnet ist;
- Fig. 11: eine Detailansicht eines unteren Bereichs des Trommelmagazins, welcher an der Magazinaufnahme angeordnet ist, wobei ein Magazinschacht des Trommelmagazins oberhalb von der Durchgangsöffnung der Magazinaufnahme positioniert ist und zwei der gemäß der ersten Ausführungsform ausgebildeten Vereinzelungseinheiten zu erkennen sind, die jeweils neben einem der Magazinschächte des Trommelmagazins angeordnet sind;
- Fig. 12: eine nochmals vergrößerte Detailansicht des unteren Bereichs des Trommelmagazins, wobei sich eine stiftförmige Vereinzelungskontur derjenigen Vereinzelungseinheit, die oberhalb von dem Pneumatikzylinder angeordnet ist, in einer unteren Endlage befindet, wodurch das ganz unten im Magazinschacht angeordnete Einlegeteil fixiert wird;
- Fig. 13: eine weitere Detailansicht des unteren Bereichs des Trommelmagazins, wobei sich die stiftförmige Vereinzelungskontur in einer mittleren Lage befindet und weiterhin das ganz unten angeordnete Einlegeteil fixiert wird;
- Fig. 14: eine weitere Detailansicht des unteren Bereichs des Trommelmagazins, wobei sich die stiftförmige Vereinzelungskontur in einer oberen Endlage befindet, wodurch das ganz unten angeordnete Einlegeteil freigegeben wird und nach unten aus dem Magazinschacht fällt, wobei ein an zweitunterster Stelle angeordnetes Einlegeteil fixiert wird;
- Fig. 15: eine weitere Detailansicht des unteren Bereichs des Trommelmagazins, wobei die stiftförmige Vereinzelungskontur nach unten bewegt wird und das zuvor noch an zweitunterster Stelle angeordnete Einlegeteil fixiert wird;
- Fig. 16: eine weitere Detailansicht des unteren Bereichs des Trommelmagazins, wobei die stiftförmige Vereinzelungskontur wieder in ihre untere Endlage bewegt wurde und das zuvor noch an zweitunterster Stelle angeordnete Einlegeteil auf einen in den Magazinschacht ausgefahrenen Sperrstift fallen und durch diesen gehalten werden kann;
- Fig. 17: eine Seitenschnittansicht des Trommelmagazins, wobei in einem unteren Bereich des Trommelmagazins ein Magazineinsatz angeordnet ist, der mehrere Vereinzelungseinheiten gemäß einer zweiten Ausführungsform aufweist;
- Fig. 18: eine Seitenschnittansicht des Magazineinsatzes;
- Fig. 19: eine Perspektivansicht von einem der Vereinzelungseinheiten gemäß der zweiten Ausführungsform;
- Fig. 20: eine Abfolge von Abbildungen, in denen eine Betätigung von einer der Vereinzelungseinheiten gemäß der zweiten Ausführungsform dargestellt ist;
- Fig. 21: eine Perspektivansicht auf einen oberen Bereich des Trommelmagazins, welcher von einer Magazinabdeckung abgedeckt wird, die in einer die Magazinschächte freigebenden Befüllstellung angeordnet ist;
- Fig. 22: eine weitere Perspektivansicht auf den oberen Bereich des Trommelmagazins, wobei die Magazinabdeckung in eine die Magazinschächte verschließende Verschlussstellung gedreht wurde.

In den Figuren wurden gleiche oder funktionsgleiche Elemente wurden mit den gleichen Bezugszeichen versehen.

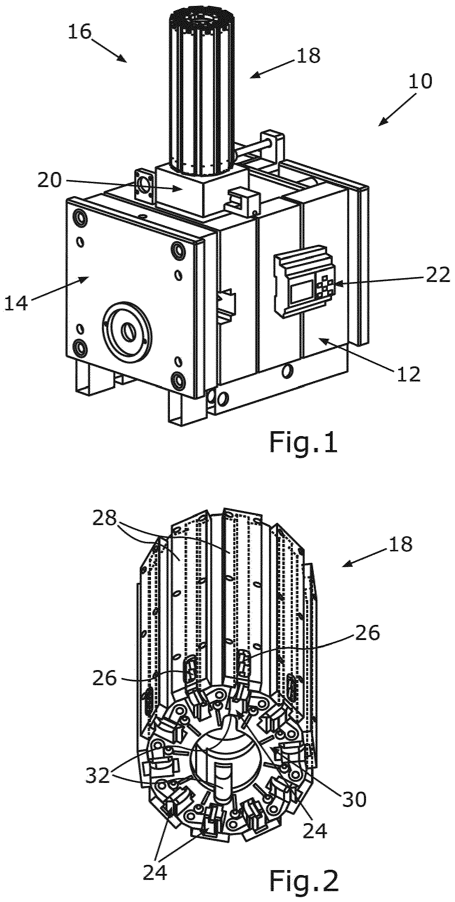

Ein Spritzgusswerkzeug 10 ist in einer Perspektivansicht in Fig. 1 gezeigt. Das Spritzgusswerkzeug 10 umfasst zwei Werkzeughälften 12, 14, wobei oberseitig an der Werkzeughälfte 12 eine Magazinvorrichtung 16 zum Bereitstellen von Einlegeteilen angeordnet ist. Die Magazinvorrichtung 16 umfasst ein Trommelmagazin 18 und eine Magazinaufnahme 20 zum Aufnehmen des Trommelmagazins 18. Die Werkzeughälfte 12 umfasst einen hier nicht erkennbaren Zuführkanal, durch welchen jeweilige mittels der Magazinvorrichtung 16 vereinzelt bereitgestellte Einlegeteile ins Innere der Werkzeughälfte 12 gelangen können. Die Anordnung der Magazinvorrichtung 16 an der Oberseite der Werkzeughälfte 12 ist nur beispielhaft zu verstehen. Wie zuvor bereits beschrieben, kann die Magazinvorrichtung 16 auch an anderen Stellen angeordnet werden, um die Einlegeteile 12 direkt oder indirekt der Werkzeughälfte 12 zuzuführen.

Die Werkzeughälfte 12 umfasst eine hier nicht erkennbare Zuführmechanik, welche dazu ausgelegt ist, die durch den Zuführkanal ins Innere der Werkzeughälfte 12 zugeführten Einlegeteile im Bereich einer Kavität zwischen den beiden Werkzeughälften 12, 14 in einer Spritzgussposition anzuordnen. Nach Anordnung der jeweiligen Einlegeteile in dieser Spritzgussposition kann das jeweilige Einlegeteil mit Kunststoff umspritzt werden, wodurch ein Spritzgussteil mit integriertem Einlegeteil erzeugt wird. Des Weiteren ist noch eine Steuerung 22 angedeutet, welche Bestandteil der Werkzeughälfte 12 sein kann. Die Steuerung 22 ist dazu ausgelegt, die Magazinvorrichtung 16 zum Zuführen der Einlegeteile ins Innere des Spritzgusswerkzeugs 10 anzusteuern.

In dem Fall ist nur eine Signalschnittstelle zwischen der Werkzeughälfte 12 und der Spritzgussmaschine 10 erforderlich. Oftmals weisen derartige Spritzgussmaschinen 10 bereits eine entsprechend geeignete Signalschnittstelle auf. Die Werkzeughälfte 12 ist somit nicht maschinengebunden und kann mit verschiedenen Spritzgussmaschinen 10 kombiniert und eingesetzt werden. Wenn die Werkzeughälfte 12 über besagte Steuerung 22 verfügt, können die entsprechenden Spritzgussmaschinen 10 günstiger sein, da diese die Funktionalität der Steuerung der Werkzeughälfte 12 und/oder der Magazinvorrichtung 16 nicht abdecken können müssen.

Ein weiterer Vorteil ist, dass die Möglichkeit besteht, eine Funktionsprüfung, z.B. nach einer Wartung, oder Tests durchführen zu können, ohne dass dafür die Spritzgussmaschine 10 benötigt wird. Dadurch, dass die Steuerung 22 das gesamte Spritzgusswerkzeug und somit auch die Werkzeughälfte 12 sowie die Magazinvorrichtung 16 überwachen kann, weiß man genau, wo und was es für ein Problem oder Fehler es gegebenenfalls gibt. Dadurch vereinfacht sich auch die Bedienung und Überwachung der Spritzgussmaschine 10.

Es ist aber auch möglich, dass die Werkzeughälfte 12 selbst keine eigene Steuerung aufweist. In dem Fall kann beispielsweise die Spritzgussmaschine 10 die Steuerung 22 aufweisen. Diese kann dann u.a. auch die Magazinvorrichtung 16 steuern.

In Fig. 2 ist das Trommelmagazin 18 in einer teiltransparenten Perspektivansicht von schräg unten gezeigt. An unterschiedlichen Umfangspositionen des Trommelmagazins 18 sind jeweilige Magazinschächte 24 vorgesehen, die sich in axialer Richtung des Trommelmagazins 18 erstrecken und dazu ausgelegt sind, die bereits erwähnten Einlegeteile 26 in einer jeweiligen Reihe übereinander angeordnet aufzunehmen. Vorliegend handelt es sich bei den Einlegeteilen 26 um buchsenförmige Einlegeteile, beispielsweise in Form von Gewindebuchsen. Abweichend von der vorliegenden Darstellung ist es auch möglich, dass das Trommelmagazin 18 andersartige Einlegeteile, beispielsweise in Form von Schrauben, Bolzen, Stiften, Passstiften oder dergleichen aufnehmen kann. Die nachfolgenden Erläuterungen zur Magazinvorrichtung 16 gelten für beliebige Arten von Einlegeteilen 26, welche im Zuge eines Spritzgussvorgangs umspritzt werden können.

In radialer Richtung außenseitig ist am Trommelmagazin 18 eine Magazinabdeckung 28 vorgesehen. Diese deckt unter anderem die jeweiligen Magazinschächte 24 in radialer Richtung ab. Der Teil des Trommelmagazins 18, welcher die Magazinschächte 24 aufweist, kann beispielsweise durch Kunststoff-3D-Druck hergestellt werden. Dies kann insbesondere vorteilhaft sein, wenn das Trommelmagazin 18 nur in geringen Stückzahlen hergestellt werden soll. Auch ist es beispielsweise möglich, den Teil des Trommelmagazins 18, der die Magazinschächte 24 aufweist, mittels Strangpressen oder Extrudieren herzustellen. Diese Fertigungsverfahren können sich insbesondere dann anbieten, wenn eine große Stückzahl der Trommelmagazine 18 hergestellt werden soll. Unterseitig am Trommelmagazin 18 ist noch ein Magazineinsatz 30 montiert. Der Magazineinsatz 30 weist im vorliegend gezeigten Fall noch zwei Nuten 32 auf.

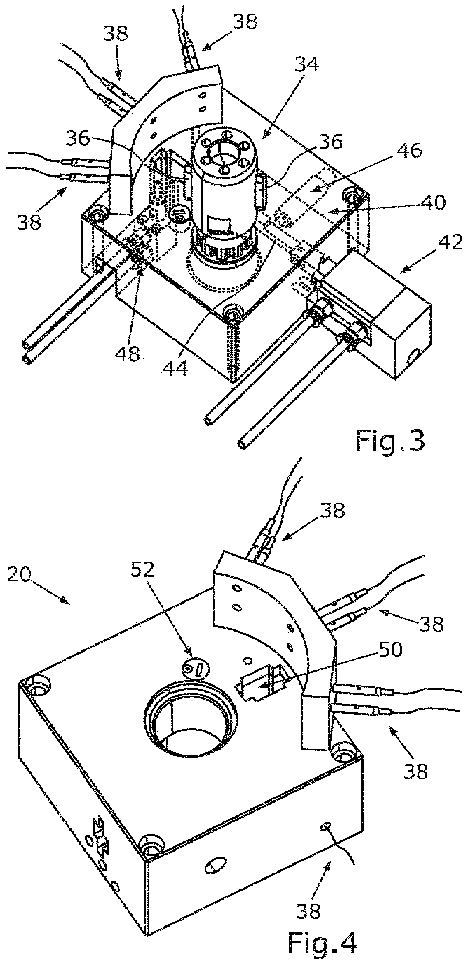

In Fig. 3 ist die Magazinaufnahme 20 in einer Perspektivansicht gezeigt, wobei eine Welle 34 zum Aufnehmen und Rotieren des Trommelmagazins 18 an der Magazinaufnahme 20 angeordnet ist. Die Welle 34 weist zwei Passfedern 36 auf, die auf die Form der Nuten 32 des Magazineinsatzes 30 angepasst sind. Das Trommelmagazin 18 kann also mitsamt dem montierten Magazineinsatz 30 über die Welle 34 gestülpt werden, wobei die Passfedern 36 in Eingriff mit den Nuten 32 gelangen.

Die Magazinaufnahme 20 umfasst zudem mehrere Sensoren 38, welche Bestandteil einer Sensoreinrichtung der Magazinvorrichtung 16 sein können, die dazu ausgelegt sind, einen Füllstand der Magazinschächte 24 hinsichtlich der aufgenommenen Einlegeteile 26 zu erfassen. So ist es möglich, fortlaufend zu überwachen, wie es um den Füllstand der jeweiligen Magazinschächte 24 hinsichtlich der Einlegeteile 26 bestellt ist.

Zur Magazinvorrichtung 16 gehört zudem eine Rotiereinrichtung 40 zum Rotieren des Trommelmagazins 18, welche dazu ausgelegt ist, bei an der Magazinaufnahme 20 angeordnetem Trommelmagazin 18 die jeweiligen Magazinschächte 24 in eine Zuführstellung zu drehen. Neben der Welle 34 gehört noch ein Pneumatikzylinder 42 zur Rotiereinrichtung 40, eine Drehbetätigung 44 zum Rotieren der Welle 34 sowie eine Gasdruckfeder 46. Die Funktionsweise der Rotiereinrichtung 40 wird nachfolgend noch genauer erläutert.

Zur Magazinvorrichtung 16 gehört zudem noch eine hier nur teilweise erkennbare Vereinzelungseinrichtung 48, welche dazu ausgelegt ist, die jeweiligen in den Magazinschächten 24 angeordneten Einlegeteile 26 zu vereinzeln, sodass diese einzeln schwerkraftbedingt die jeweiligen Magazinschächte 24 nach unten und somit in Richtung der Werkzeughälfte 12 verlassen können.

In Fig. 4 ist die Magazinaufnahme 20 in einer Perspektivansicht gezeigt. Die Magazinaufnahme 20 weist eine Durchgangsöffnung 50 auf, welche in einer bestimmungsgemäßen Anordnung der Magazinaufnahme 20 an der Werkzeughälfte 12 in den besagten Zuführkanal der Werkzeughälfte 12 mündet. In der bereits erwähnten Zuführstellung der Magazinschächte 24 sind diese jeweils oberhalb von der Durchgangsöffnung 50 angeordnet. So können die in den Magazinschächten 24 aufgenommenen Einlegeteile 26 das Trommelmagazin 18 schwerkraftbedingt nach unten verlassen und fallen durch die Durchgangsöffnung 50 in den besagten Zuführkanal des Spritzgusswerkzeugs 10. Die Magazinaufnahme 20 umfasst zudem eine Arretierung 52 zum Arretieren des Trommelmagazins 18. Gemäß der vorliegenden Darstellung rechts unten ist noch ein weiterer Sensor 38 angedeutet, welcher dazu ausgelegt ist, zu erfassen, ob und/oder wann eines der Einlegeteile 26 in Richtung der Durchgangsöffnung 50 der Magazinaufnahme 20 freigegeben wurde.

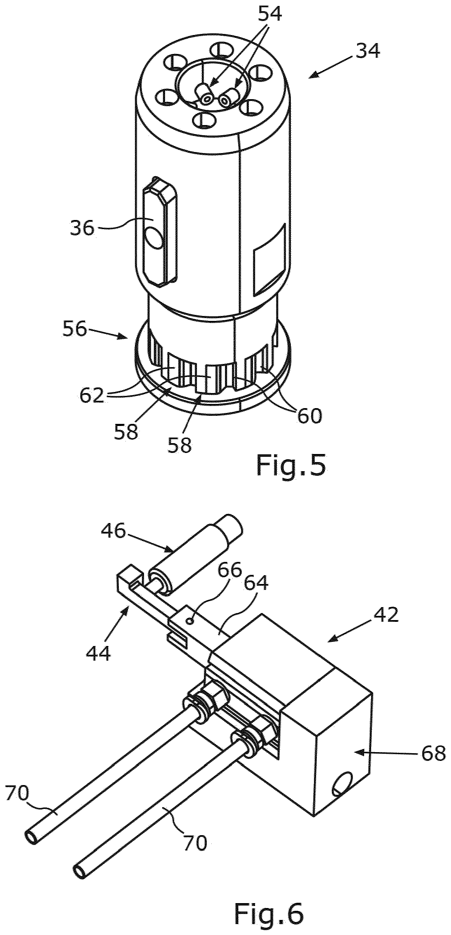

In Fig. 5 ist die Welle 34 allein in einer Perspektivansicht gezeigt. In einem oberen Bereich der Welle 34 ist ein Rastmechanismus 54, vorliegend in Form von Kugelrasten, vorgesehen. Mittels des Rastmechanismus 54 kann das auf die Welle 34 aufgesteckte Trommelmagazin 18 zuverlässig verrastst und somit fixiert werden. In einem unteren Bereich der Welle 34 ist eine Verzahnung 56 mit mehreren Zähnen 58 vorgesehen. Die jeweiligen Zähne 58 weisen jeweils eine Eingriffsfläche 60 und eine von den Eingriffsflächen 60 abgewandte Rückseite 62 auf. Wie zu erkennen, erstrecken sich die Eingriffsflächen 60 zumindest im Wesentlichen in radialer Richtung der Welle 34, wobei die Rückseiten 62 bezogen auf die radiale Richtung schräg verlaufen.

In Fig. 6 ist die pneumatisch ansteuerbare Drehbetätigung 44 in einer Perspektivansicht gezeigt. Die Drehbetätigung 44 ist an einer Aufnahme 64 unter Vermittlung einer Achse 66 verschwenkbar gelagert. Innerhalb beziehungsweise an einer Aufnahme 68 ist der hier nicht weiter erkennbare und bereits erwähnte Pneumatikzylinder 42 angeordnet, der über jeweilige Schläuche 70 mit Druckluft versorgt werden kann. Der Pneumatikzylinder 42 kann die Aufnahme 64 translatorisch einfahren und ausfahren, sodass entsprechend die Drehbetätigung 44 ebenfalls ausgefahren und eingefahren werden kann. Die Gasdruckfeder 46 liegt dabei permanent an der Drehbetätigung 44 an und übt eine Federkraft auf die Drehbetätigung 44 aus, gemäß der vorliegenden Darstellung übt diese ein Moment gegen den Uhrzeigersinn auf die Drehbetätigung 44 aus.

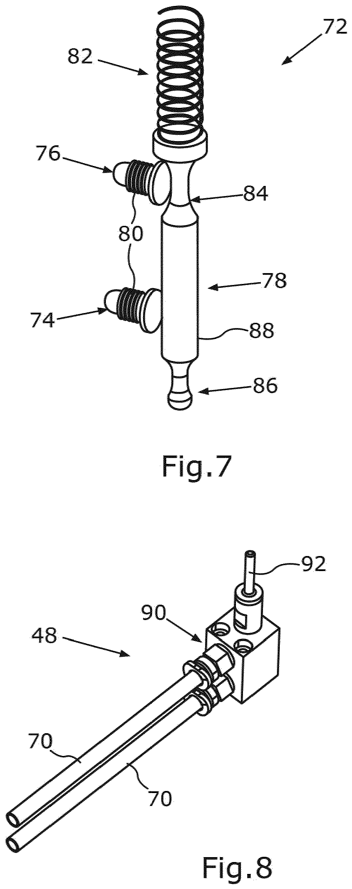

In Fig. 7 ist eine erste Ausführungsform einer Vereinzelungseinheit 72 in einer Perspektivansicht dargestellt, welche dazu ausgelegt ist, die im Trommelmagazin 18 aufgenommenen Einlegeteile 26 zu vereinzeln. Die Vereinzelungseinheit 72 gehört zu der bereits erwähnten Vereinzelungseinrichtung 48, wobei je Magazinschacht 24 eine dieser Vereinzelungseinheiten 72 vorgesehen ist. Die Vereinzelungseinheit 72 gemäß der hier gezeigten ersten möglichen Ausführungsform umfasst einen unteren Sperrstift 74, einen oberen Sperrstift 76 sowie eine Vereinzelungskontur 78. Die Sperrstifte 74, 76 können zwischen einer in den jeweiligen Magazinschacht 24 hineinragenden Sperrstellung und einer nicht in den Magazinschacht 24 hineinragenden Freigabestellung bewegt werden. Die Sperrstifte 74, 76 werden dabei jeweils mittels einer Feder 80 mit einer Federkraft in Richtung der Freigabestellung beaufschlagt. Die jeweiligen Vereinzelungskonturen 78 werden zudem mittels einer jeweiligen Rückstellfeder 82 beaufschlagt, die eine Federkraft in Richtung einer unteren Endstellung auf die Vereinzelungskonturen 78 ausüben. Die jeweiligen Vereinzelungskonturen 78 können zwischen der besagten unteren Endstellung und einer oberen Endstellung in axialer Richtung des Trommelmagazins 18 bewegt werden.

Bei einer Bewegung von der unteren in die obere Endlage wird die Bewegung der Sperrstifte 74, 76 so gesteuert, dass die jeweiligen an unterster Stelle in den Magazinschächten 24 angeordneten Einlegeteile 26 vereinzelt und nach unten aus den Magazinschächten 24 in Richtung der Durchgangsöffnung 50 der Magazinaufnahme 20 freigeben werden.

Die im vorliegenden Fall stiftförmig ausgebildete Vereinzelungskontur 78 weist bezüglich des zugeordneten Magazinschachts 24 eine obere zurückversetzte Vertiefung 84 und eine untere zurückversetzte Vertiefung 86 sowie dazwischen einen hervorstehenden Mittenbereich 88 auf. Das genaue Zusammenspiel zwischen der Vereinzelungskontur 78 und den Sperrstiften 74, 76 wird nachfolgend noch genauer erläutert.

In Fig. 8 ist ein Pneumatikzylinder 90 in einer Perspektivansicht gezeigt, mittels welchem ein Betätigungselement 92 bewegt werden kann. Das Betätigungselement 92 kann zum Pneumatikzylinder 90 gehören, z.B. einteilig mit diesem ausgebildet sein. Der Pneumatikzylinder 90 und das Betätigungselement 92 können Bestandteil der bereits erwähnten Vereinzelungseinrichtung 48 sein, zu der auch die jeweiligen Vereinzelungseinheiten 72 gehören. Unter Vermittlung des Betätigungselements 92 kann der Pneumatikzylinder 90 die jeweiligen Vereinzelungseinheiten 72 betätigen, die jeweiligen Vereinzelungskonturen 78 also von ihrer unteren Endlage in die obere Endlage bewegen.

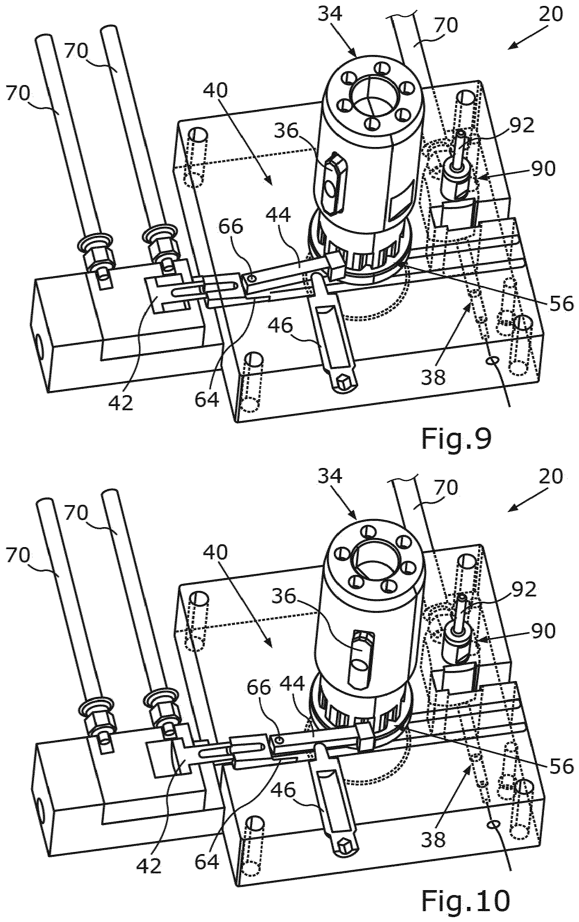

In Fig. 9 ist die Magazinaufnahme 20 in einer weiteren Perspektivansicht gezeigt, wobei die zum Rotieren der Welle 34 dienende Drehbetätigung 44 in einer eingefahrenen Stellung angeordnet ist. Dies kann man auch daran erkennen, dass der Pneumatikzylinder 42 eine eingefahrene Endlage beziehungsweise Endstellung eingenommen hat. Durch die Kraftbeaufschlagung mittels der Gasdruckfeder 46 wird die Drehbetätigung 44 in Richtung der Welle 34 herangeschwenkt. Dadurch dass die Drehbetätigung 44 nicht ausgefahren ist, greift die Drehbetätigung 44 an einem Bereich der Verzahnung 56 an, welche weiter innen als die Aufnahme 64 angeordnet ist. Durch die schwenkbare Lagerung der Drehbetätigung 44 kann unter Vermittlung der Gasdruckfeder 46 die Drehbetätigung 44 dennoch in Eingriff mit der Verzahnung 56 stehen.

Wird festgestellt, dass einer der Magazinschächte 24 keine Einlegeteile 26 mehr aufweist, kann die Rotiereinrichtung 40, welche unter anderem die Drehbetätigung 44 aufweist, das hier nicht dargestellte Trommelmagazin 18 um eine Teilung weiterdrehen, sodass der in Umfangsrichtung nächste Magazinschacht 24 über der hier nicht erkennbaren Durchgangsöffnung 50 (siehe Fig. 4) der Magazinaufnahme 20 positioniert werden kann. Dafür wird der Pneumatikzylinder 42 über die Schläuche 70 so mit Druckluft beaufschlagt, dass der Pneumatikzylinder 42 ausgefahren wird. In Folge dessen werden die Aufnahme 64 und die verschwenkbar daran gelagerte Drehbetätigung 44 ebenfalls ausgefahren. Währenddessen drückt weiterhin die Gasdruckfeder 46 die Drehbetätigung 44 an die Verzahnung 56 heran. Gemäß der vorliegenden Darstellung wird dadurch die Welle 34 gegen den Uhrzeigersinn in Drehung versetzt, sodass das hier nicht dargestellte Trommelmagazin 18 ebenfalls rotiert wird.

In Fig. 10 ist die Magazinaufnahme 20 in einer weiteren Perspektivansicht gezeigt, wobei die zum Rotieren der Welle 34 dienende Drehbetätigung 44 in ihrer ausgefahrenen Stellung angeordnet ist. Dies ist auch daran zu erkennen, dass der Pneumatikzylinder 42 seine ausgefahrene Endlage erreicht hat. Durch Drehung der Welle 34 liegt nun die Drehbetätigung 44 weiter außen an der Verzahnung 56 an. Während des Ausfahrvorgangs der Drehbetätigung 44 hat die Gasdruckfeder 46 weiterhin zuverlässig dafür gesorgt, dass die Drehbetätigung 44 in Eingriff mit einem der hier nicht näher gekennzeichneten Zähne der Verzahnung 56 bleibt.

Die Verzahnung 56 ist so geformt, dass beim Ausfahren der Drehbetätigung 44 diese in Eingriff mit einer der Eingriffsflächen 60 (siehe Fig. 5) jeweiliger Zähne 58 der Verzahnung 56 gelangt beziehungsweise steht. Wird die Drehbetätigung 44 durch entsprechende Ansteuerung beziehungsweise Betätigung des Pneumatikzylinders 42 von ihrer hier gezeigten ausgefahrenen Stellung wieder in ihre eingefahrene Stellung bewegt, so gleitet die Drehbetätigung 44 an einer der von den Eingriffsflächen 60 abgewandten Rückseite 62 der Zähne 58 entlang und wird entgegen der von der Gasdruckfeder 46 aufgebrachten Federkraft ein Stück weit von dem betreffenden Zahn 58 der Verzahnung 56 weggeschwenkt. Die Drehbetätigung 44 kann also eingefahren werden, und zwar ohne dass diese beim Einfahren die Welle 34 wieder zurückdreht.

Abweichend von der vorliegenden Darstellung kann die Rotiereinrichtung 40 auch beispielsweise einen Schrittmotor aufweisen, welcher dazu ausgelegt ist, die Welle 34 um einen Drehwinkel zu rotieren, der jeweiligen Abständen der Magazinschächte 24 in Umfangsrichtung entspricht. Statt der zuvor beschriebenen mechanischen Lösung zur passgenauen Drehung der Welle 34 kann es also auch vorgesehen sein, beispielsweise besagten Schrittmotor vorzusehen, um bei Bedarf die jeweiligen Magazinschächte 24 in ihre Zuführposition zu drehen, in der sie jeweils über der Durchgangsöffnung 50 in der Magazinaufnahme 20 angeordnet sind.

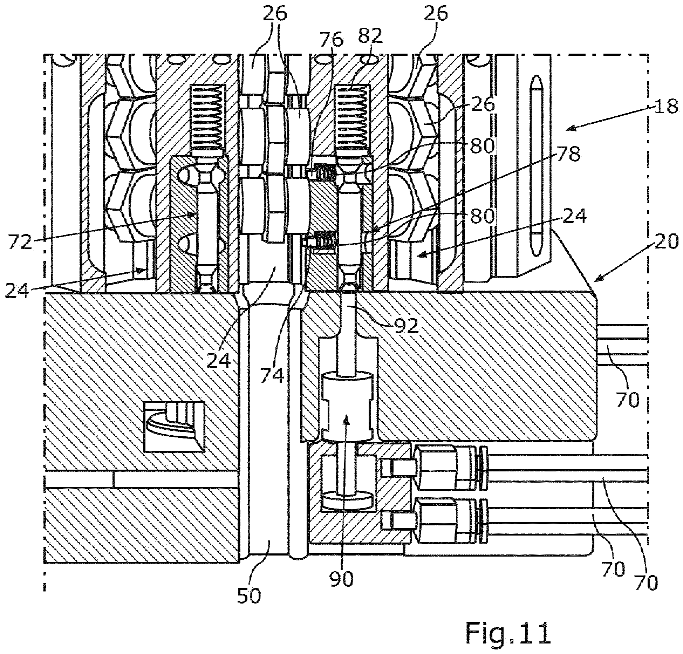

In Fig. 11 ist eine Detailansicht eines unteren Bereichs des Trommelmagazins 18 gezeigt, welcher an der Magazinaufnahme 20 angeordnet ist. Einer der Magazinschächte 24 ist oberhalb von der Durchgangsöffnung 50 der Magazinaufnahme 20 positioniert. Zwei der gemäß der ersten Ausführungsform ausgebildeten Vereinzelungseinheiten 72 sind zu erkennen, die jeweils neben einem der Magazinschächte angeordnet sind. Vorliegend ist das Betätigungselement 92 zu erkennen, das mittels des Pneumatikzylinders 90 nach oben in das Trommelmagazin 18 hineinbewegt werden kann. Anhand der nachfolgenden Figuren wird die Funktionsweise der ersten Ausführungsform der Vereinzelungseinheiten 72 näher erläutert, mittels welchen die Einlegeteile 26 einzeln der Durchgangsöffnung 50 zugeführt werden können.

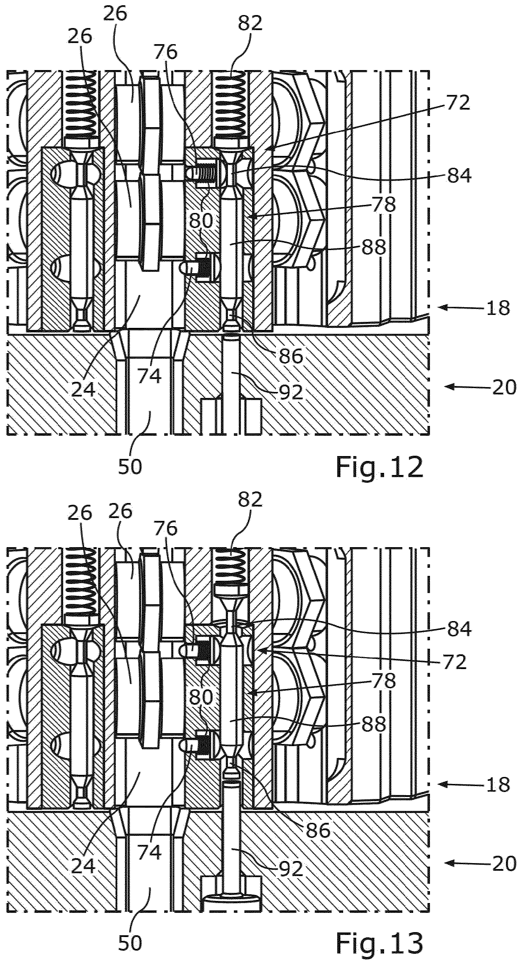

In Fig. 12 ist nochmals eine vergrößerte Detailansicht des unteren Bereichs des Trommelmagazins 18 dargestellt, wobei sich die stiftförmige Vereinzelungskontur 78 derjenigen Vereinzelungseinheit 72, die oberhalb von dem Betätigungselement 92 und somit oberhalb von dem hier nicht erkennbaren Pneumatikzylinder 90 angeordnet ist, in einer unteren Endlage befindet. Dadurch wird das ganz unten im Magazinschacht 24 angeordnete Einlegeteil 26, das oberhalb von der Durchgangsöffnung 50 der Magazinaufnahme 20 angeordnet ist, fixiert. In der hier gezeigten unteren Endlage der Vereinzelungskontur 78 ist der zugehörige untere Sperrstift 74 auf Höhe des hervorstehenden beziehungsweise verdickten Mittenbereichs 88 der Vereinzelungskontur 78 angeordnet. Dadurch wird der untere Sperrstift 74 entgegen der Federkraft des Federelements 80 in seine Sperrstellung gezwungen. In dieser Sperrstellung ragt der untere Sperrstift 74 soweit in den Magazinschacht 24 hinein, dass das ganz unten angeordnete Einlegeteil 26 fixiert wird und somit nicht in Richtung der Durchgangsöffnung 50 fallen kann. Der zugehörige obere Sperrstift 76 ist auf Höhe der oberen Vertiefung 84 angeordnet, dadurch wird der obere Sperrstift 76 bedingt durch die von der Feder 80 aufgebrachte Federkraft in seine Freigabestellung gezwungen.

Wie hier gut zu erkennen, ragt der obere Sperrstift 78 in seiner Freigabestellung nicht in den Magazinschacht 74 hinein. Um das ganz unten angeordnete Einlegeteil 26, das oberhalb von der Durchgangsöffnung 50 positioniert ist, zu vereinzeln, wird das Betätigungselement 92 durch den hier nicht erkennbaren darunter angeordneten Pneumatikzylinder 90 nach oben in das Trommelmagazin 18 hineinbewegt. Dadurch wird die betreffende Vereinzelungskontur 78 entgegen der von der Rückstellfeder 82 aufgebrachten Kraft nach oben gedrückt.

In Fig. 13 ist eine weitere Detailansicht des unteren Bereichs des Trommelmagazins 18 dargestellt, wobei sich die stiftförmige Vereinzelungskontur 78 in einer mittleren Lage befindet und weiterhin das ganz unten angeordnete Einlegeteil 26, das oberhalb von der Durchgangsöffnung 50 der Magazinaufnahme 20 angeordnet ist, fixiert. Wie zu erkennen wurde durch entsprechende Betätigung des Pneumatikzylinders 90 das Betätigungselement 92 ein Stück weit nach oben in das Trommelmagazin 18 hineinbewegt. In Folge dessen wurde die Vereinzelungskontur 78 entsprechend in axialer Richtung des Trommelmagazins 18 ebenfalls entgegen der von der Rückstellfeder 82 aufgebrachten Federkraft nach oben gedrückt. Der untere Sperrstift 74 liegt immer noch an dem hervorstehenden beziehungsweise verdickten Mittenbereich 88 der Vereinzelungskontur 78 an, allerdings nun weiter unten als in Fig. 12. Durch die Bewegung der Vereinzelungskontur 78 nach oben ist der obere Sperrstift 76 nun ebenfalls in Eingriff mit dem verdickten beziehungsweise hervorstehenden Mittenbereich 88 gelangt. In Folge dessen wurde nun auch der obere Sperrstift 76 in seine Sperrstellung verbracht, sodass dieser nun zwischen das unterste und das zweitunterste Einlegeteil 26 gelangt ist. Das ganz unten angeordnete Einlegeteil 26 wird also weiterhin davor bewahrt, schwerkraftbedingt in Richtung der Durchgangsöffnung 50 der Magazinaufnahme 20 zu fallen.

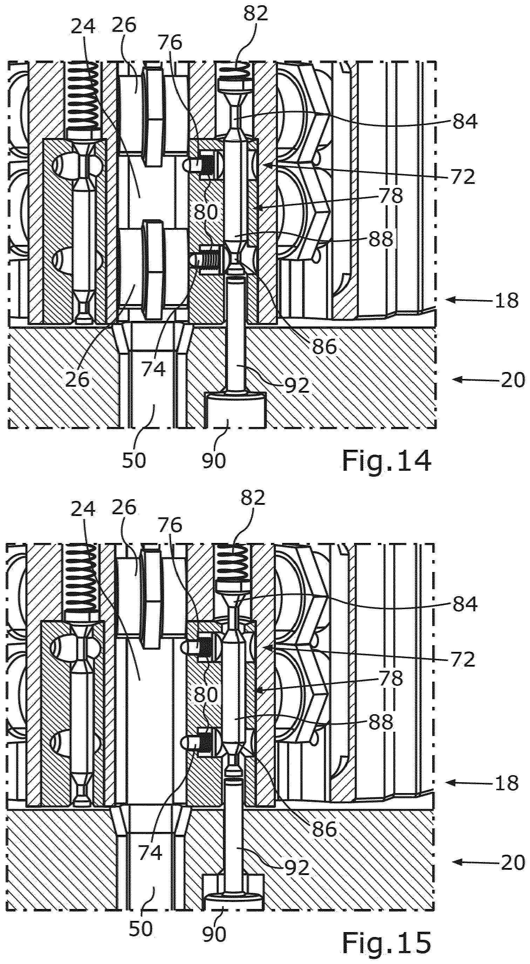

In Fig. 14 ist eine weitere Detailansicht des unteren Bereichs des Trommelmagazins 18 gezeigt, wobei die stiftförmige Vereinzelungskontur 78 nun bis in ihre obere Endlage bewegt wurde, wodurch das ganz unten angeordnete Einlegeteil 26, das oberhalb von der Durchgangsöffnung 50 der Magazinaufnahme 20 positioniert ist, freigegeben wurde und nach unten aus dem Magazinschacht 24 fällt. Das an zweitunterster Stelle angeordnete Einlegeteil 26, das oberhalb von der Durchgangsöffnung 50 angeordnet ist, wird hingegen fixiert.

In der hier gezeigten oberen Endlage der Vereinzelungskontur 78 ist der zugehörige untere Sperrstift 74 auf Höhe der unteren Vertiefung 86 der Vereinzelungskontur 78 angeordnet. Dadurch wird die federkraftbedingte Bewegung des unteren Sperrstifts 74 in seine Freigabestellung freigegeben. Der untere Sperrstift 74 ragt also nicht mehr in den Magazinschacht 24 hinein, sodass schwerkraftbedingt das unterste Einlegeteil 26 freigegeben wird und in Richtung der Durchgangsöffnung 50 fällt. Der zugehörige obere Sperrstift 76 hingegen ist auf Höhe des verdickten beziehungsweise hervorstehenden Mittenbereichs 88 der Vereinzelungskontur 78 angeordnet und wird dadurch in seine Sperrstellung gezwungen. Durch den in den Magazinschacht 24 hineinragenden oberen Sperrstift 76 wird verhindert, dass das bislang zweitunterste Einlegeteil 26 schwerkraftbedingt nach unten fallen kann.

In Fig. 15 ist eine weitere Detailansicht des unteren Bereichs des Trommelmagazins 18 gezeigt, wobei die stiftförmige Vereinzelungskontur 78 ein Stück weit aus der oberen Endlage nach unten bewegt wurde, wobei weiterhin das zuvor noch an zweitunterster Stelle angeordnete Einlegeteil 26 fixiert wird. Das zuvor noch an der untersten Stelle angeordnete Einlegeteil 26 hat den Magazinschacht 24 schwerkraftbedingt bereits nach unten verlassen und ist durch die Durchgangsöffnung 50 der Magazinaufnahme 20 in den bereits erwähnten Zuführkanal der Werkzeughälfte 12 gelangt. Die Vereinzelungskontur 78 befindet sich augenblicklich in einer mittleren Stellung zwischen der oberen Endlage und der unteren Endlage. Der obere Sperrstift 76 ist gerade so noch auf Höhe des verdeckten beziehungsweise hervorstehenden Mittenbereichs 88 angeordnet und wird daher weiterhin in seine in den Magazinschacht 24 ragende Sperrstellung gezwungen, gleiches gilt auch für den unteren Sperrstift 74.

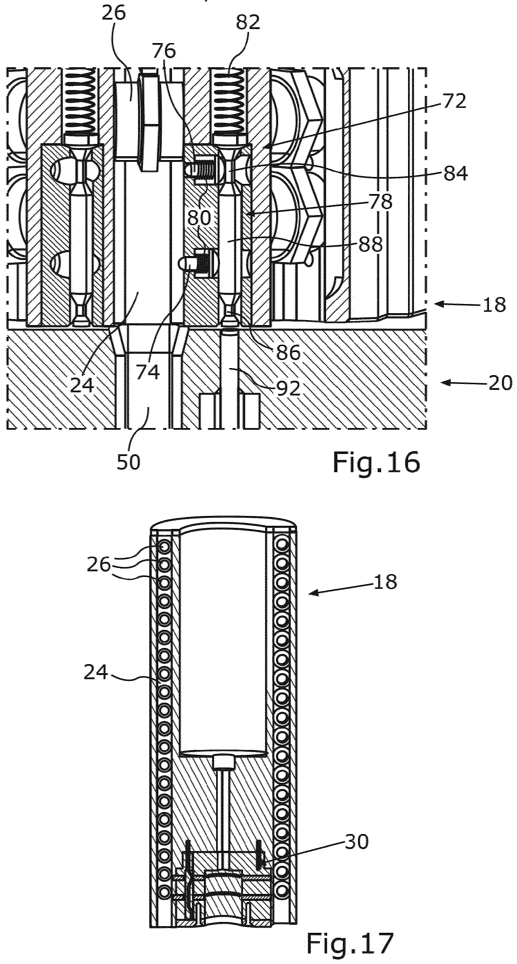

In Fig. 16 ist eine weitere Detailansicht des unteren Bereichs des Trommelmagazins 18 dargestellt, wobei die stiftförmige Vereinzelungskontur 78 gerade wieder in ihre untere Endlage bewegt wurde. Das vor der Aufwärtsbewegung der Vereinzelungskontur 78 noch zweitunterste Einlegeteil 26 wird nun von dem oberen Sperrstift 76 freigegeben, wobei der untere Sperrstift 74 bereits seine in den Magazinschacht 24 hineinragende Sperrstellung eingenommen hat. Schwerkraftbedingt fällt das nun unterste Einlegeteil 26, das oberhalb von der Durchgangsöffnung 50 der Magazinaufnahme 20 angeordnet ist, so weit herunter, bis dessen Abwärtsbewegung von dem in seiner Sperrstellung angeordneten unteren Sperrstift 74 gestoppt wird.

Die jeweiligen Vereinzelungskonturen 78 und die diesen zugeordneten unteren und oberen Sperrstifte 74, 76 wirken so zusammen, dass bei einer Bewegung von der unteren in die obere Endlage der Vereinzelungskontur 78 der jeweilige obere Sperrstift 76 zuerst seine Sperrstellung einnimmt, bevor der untere Sperrstift 74 seine Freigabestellung einnimmt. Dadurch kann sichergestellt werden, dass das momentan zweitunterste Einlegeteil 26 nicht gemeinsam mit dem momentan untersten Einlegeteil 26 schwerkraftbedingt in Richtung der Durchgangsöffnung 50 fällt. Mit anderen Worten kann also sichergestellt werden, dass immer nur eines der Einlegeteile 26, nämlich das am untersten angeordnete, mit Erreichen der oberen Endlage der Vereinzelungskontur 78 freigegeben wird und somit schwerkraftbedingt in die Durchgangsöffnung 50 der Magazinaufnahme 20 fallen kann.

Zudem sind die jeweiligen Vereinzelungskonturen 78 so geformt und zu den diesen zugeordneten Sperrstiften 74, 76 angeordnet, dass bei einer Bewegung von der oberen in die untere Endlage der Vereinzelungskontur 78 der jeweilige untere Sperrstift 74 zuerst seine Sperrstellung einnimmt, bevor der obere Sperrstift 76 seine Freigabestellung einnimmt. Das nach Erreichen der oberen Endstellung der Vereinzelungskontur 78 dann unterste Einlegeteil 26 wird also erst dann freigegeben, wenn der unter Sperrstift 74 den Fall des Einlegeteils 26 nach unten stoppen kann. Sämtliche zur Vereinzelungseinrichtung 48 gehörenden Vereinzelungseinheiten 72 können in den in Fig. 2 gezeigten Magazineinsatz 30 integriert sein. Dadurch kann sichergestellt werden, dass die jeweiligen Vereinzelungseinheiten 72 passgenau neben den jeweiligen Magazinschächten 24 angeordnet werden können. Bei der vorstehend beschriebenen ersten Ausführungsform der Vereinzelungseinheiten 72 werden die Sperrstifte 74, 76 zumindest im Wesentlichen in tangentialer Richtung in die jeweiligen Magazinschächte 24 hinein und aus diesen herausbewegt.

In Fig. 17 ist eine Seitenschnittansicht des Trommelmagazins 18 gezeigt, wobei in einem unteren Bereich des Trommelmagazins 18 wiederum der Magazineinsatz 30 angeordnet ist, der mehrere Vereinzelungseinheiten gemäß einer zweiten Ausführungsform aufweist. Aus Übersichtlichkeitsgründen wurden die Vereinzelungseinheiten gemäß der zweiten Ausführungsform vorliegend noch nicht mit Bezugszeichen versehen.

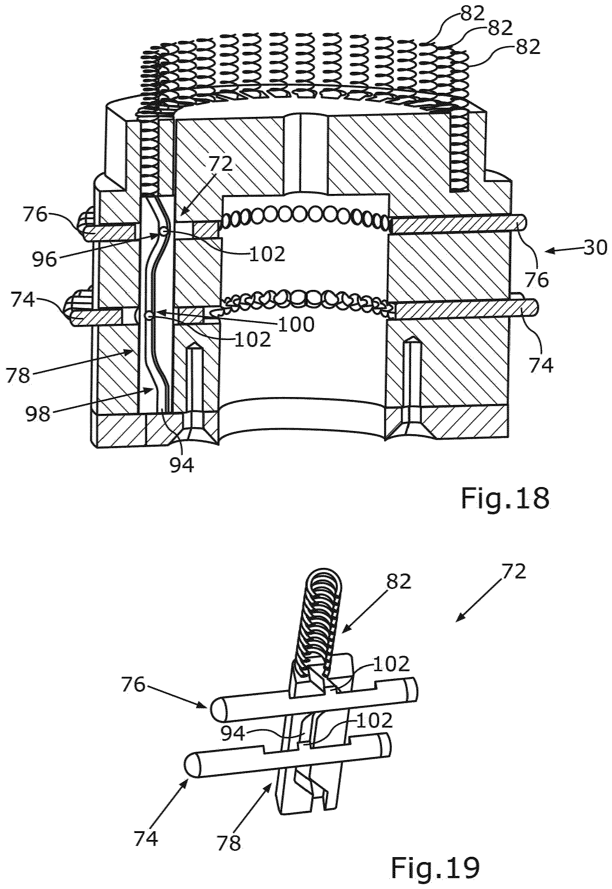

In Fig. 18 ist eine Seitenschnittansicht des Magazineinsatzes 30 dargestellt. Vorliegend ist eine der Vereinzelungseinheiten 72 gemäß der zweiten Ausführungsform zu erkennen. Die jeweiligen Vereinzelungskonturen 72 gemäß der zweiten Ausführungsform weisen jeweils eine Führungsbahn 94 auf, die bezüglich des hier nicht erkennbaren zugeordneten Magazinschachts 24 einen oberen zurückversetzten Abschnitt 96 und einen unteren zurückversetzten Abschnitt 98 sowie dazwischen einen hervorstehenden Mittenabschnitt 100 aufweisen. Die jeweiligen der Vereinzelungskontur 78 zugeordneten oberen und unteren Sperrstifte 74, 76 greifen in die jeweils zugehörige Führungsbahn 94 ein. Die Sperrstifte 74, 76 weisen jeweils einen quer zur Längsrichtung der Sperrstifte 74, 76 verlaufenden Fortsatz 102 auf, der in die jeweilige Führungsbahn 94 eingreift.

In Fig. 19 ist eine Perspektivansicht von einer der Vereinzelungseinheiten 72 gemäß der zweiten Ausführungsform gezeigt. Vorliegend kann man nochmals gut erkennen, wie die stiftartigen Fortsätze 102 in die Führungsbahn 94 eingreifen. Bei der zweiten Ausführungsform der Vereinzelungseinheiten 72 können die unteren und oberen Sperrstifte 74, 76 ebenfalls zwischen einer Freigabestellung und einer Sperrstellung hin und her bewegt werden. Die Sperrstifte 74, 76 werden dabei mittels der jeweiligen Vereinzelungskontur 78 in radialer Richtung eingefahren beziehungsweise ausgefahren.

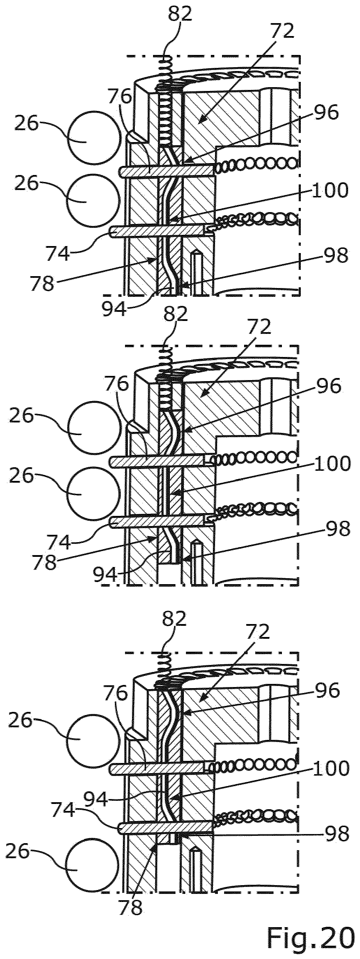

In Fig. 20 ist eine Abfolge von Abbildungen gezeigt, in denen eine Betätigung von einer der Vereinzelungseinheiten 72 gemäß der zweiten Ausführungsform dargestellt ist. Die Einlegeteile 26 sind nur schematisch dargestellt. In der obersten Abbildung ist die Vereinzelungskontur 78 in ihrer unteren Endlage angeordnet. Der zugehörige untere Sperrstift 74 ist auf Höhe des Mittenabschnitts 100 der Führungsbahn 94 angeordnet und wird dadurch durch die Führungsbahn 94 in seine Sperrstellung gezwungen. Der untere Sperrstift 74 ragt also so weit in den hier nicht dargestellten Magazinschacht 24 hinein, dass das ganz unten angeordnete Einlegeteil 26 wiederum nicht in Richtung der hier nicht dargestellten Durchgangsöffnung 50 der Magazinaufnahme 20 fallen kann. Der zugehörige obere Sperrstift 76 ist auf Höhe des oberen zurückversetzten Abschnitts 96 der Führungsbahn 94 angeordnet und wird dadurch in seine Freigabestellung gezwungen. In seiner Freigabestellung ist der obere Sperrstift 76 so weit aus dem Magazinschacht 24 zurückgezogen, dass das zweitoberste Einlegeteil 26 nicht gesperrt wird. Entgegen der vorliegenden Darstellung kann der obere Sperrstift 76 in seine Freigabestellung auch so weit in radialer Richtung zurückgezogen angeordnet sein, dass dieser gar nicht in den Magazinschacht 24 ragt. Zur Vereinzelung des an unterster Stelle angeordneten Einlegeteils 26 wird die Vereinzelungskontur 78 wie bei der ersten Ausführungsform in axialer Richtung nach oben in das hier nicht gezeigte Trommelmagazin 18 hineinbewegt. Dies kann wiederum mittels des hier nicht gezeigten Pneumatikzylinders 90 und des Betätigungselements 92 erfolgen.

In der mittleren Abbildung in Fig. 20 wurde die Vereinzelungskontur 78 bereits ein Stück weit nach oben bewegt und befindet sich in einer Art Mittenstellung zwischen der unteren und der oberen Endlage. Vorliegend wurde die Vereinzelungskontur 78 so weit nach oben bewegt, dass sich die beiden Sperrstifte 74, 76 auf Höhe des bezogen auf den Magazinschacht 24 hervorstehenden Mittenabschnitts 100 befinden. In Folge dessen wurde nun auch der obere Sperrstift 76 in seine Sperrstellung durch die Führungsbahn 94 gezwungen. Die Rückstellfeder 82 übt wiederum wie bei der ersten Ausführungsform eine Rückstellkraft nach unten, also in Richtung der unteren Endlage der Vereinzelungskontur 78 aus. Die Rückstellkraft wird wiederum durch den Pneumatikzylinder 90 überwunden, der vorliegend nicht dargestellt ist.

In der untersten Abbildung in Fig. 20 ist die Vereinzelungskontur 78 so weit nach oben bewegt worden, bis sie ihre obere Endlage erreicht hat. In der oberen Endlage der Vereinzelungskontur 78 ist der zugehörige untere Sperrstift 74 auf Höhe des unteren zurückversetzten Abschnitts 98 angeordnet in Folge dessen der untere Sperrstift 74 durch die Führungsbahn 94 in seine Freigabestellung gezwungen wurde. Entgegen der vorliegenden Darstellung kann der untere Sperrstift 74 in seine Freigabestellung auch so weit in radialer Richtung zurückgezogen angeordnet sein, dass dieser gar nicht in den Magazinschacht 24 ragt.

Das an unterster Stelle angeordnete Einlegeteil 26 kann somit schwerkraftbedingt durch den hier nicht näher dargestellten Magazinschacht 24 in Richtung der hier ebenfalls nicht dargestellten Durchgangsöffnung 50 der Magazinaufnahme 20 fallen. In der oberen Endlage der Vereinzelungskontur 78 ist der zugehörige obere Sperrstift 76 auf Höhe des in Richtung des Magazinschachts hervorstehenden Mittenabschnitts 100 angeordnet, sodass die Führungsbahn 94 den oberen Sperrstift 76 in seine Sperrstellung gezwungen hat. Dadurch wird wiederum verhindert, dass das bislang an zweitunterster Stelle angeordnete Einlegeteil 26 schwerkraftbedingt nach unten fallen kann.

Die Vereinzelungskontur 78 wird dann wiederum von der oberen Endstellung in ihre untere Endstellung bewegt. Auch bei dieser Ausführungsform sind die Vereinzelungskonturen 78 so geformt und zu den diesen zugeordneten Sperrstiften 74, 76 angeordnet, dass bei der Bewegung von der oberen in die untere Endlage der jeweilige untere Sperrstift 74 zuerst seine Sperrstellung einnimmt, bevor der obere Sperrstift 76 seine Freigabestellung einnimmt. Wenn der obere Sperrstift 76 also seine Freigabestellung eingenommen hat und das betreffende dann an unterster Stelle angeordnete Einlegeteil 26 schwerkraftbedingt nach unten fallen kann, ragt der untere Sperrstift 74 schon so weit in den betreffenden Magazinschacht 24 hinein, hat also seine Sperrstellung eingenommen, dass das dann herunterfallende Einlegeteil 26 aufgefangen werden kann. Zudem sind die Vereinzelungskonturen 78 auch bei der zweiten Ausführungsform so geformt und zu den diesen zugeordneten Sperrstiften 74, 76 angeordnet, dass bei einer Bewegung von der unteren in die obere Endlage der jeweilige obere Sperrstift 76 zuerst seine Sperrstellung einnimmt, bevor der untere Sperrstift 74 seine Freigabestellung einnimmt. Dadurch kann wiederum verhindert werden, dass das bis dahin an zweitunterster Stelle angeordnete Einlegeteil 26 mit dem an unterster Stelle angeordneten Einlegeteil 26 zusammen schwerkraftbedingt in Richtung der Durchgangsöffnung 50 der Magazinaufnahme 20 herunterfällt.

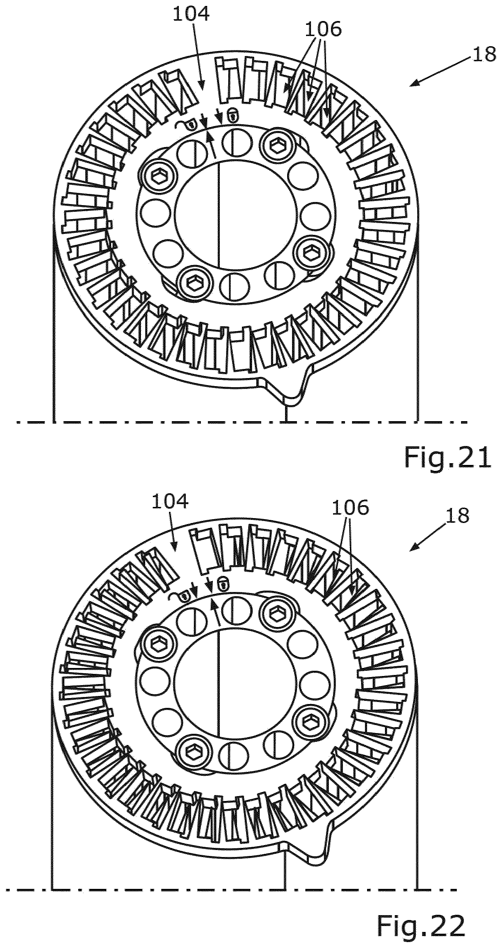

In Fig. 21 ist ein oberer Bereich des Trommelmagazins 18 in einer Perspektivansicht gezeigt, welcher von einer Magazinabdeckung 104 abgedeckt wird, die in einer die jeweiligen Magazinschächte 24 freigebenden Befüllstellung angeordnet ist. Die Magazinvorrichtung 16 weist also die besagte Magazinabdeckung 104 auf, welche zum Verschließen der Oberseite des Trommelmagazins 18 dient. Die Magazinabdeckung 104 ist zwischen der hier gezeigten Befüllstellung und einer Verschlussstellung verdrehbar. Die Magazinabdeckung 104 weist genauso viele Öffnungen 106 auf, wie das Trommelmagazin 18 Magazinschächte 24 aufweist. Die Öffnungen 106 sind genauso über den Umfang der Magazinabdeckung 104 verteilt angeordnet, wie es die Magazinschächte 24 über den Umfang des Trommelmagazins 18 sind. Die Öffnungen 106 können so geformt sein, dass nur ganz bestimmte Varianten der Einlegeteile 26 überhaupt durch diese Öffnungen 106 in die Magazinschächte 24 gelangen können. Dadurch kann sichergestellt werden, dass nur die bestimmungsgemäßen Varianten der Einlegeteile 26 auch im Trommelmagazin 18 angeordnet werden können. Zudem ist es auch möglich, dass die Öffnungen 106 so geformt sind, dass die Einlegeteile 26 nur in einer bestimmungsgemäßen Anordnung durch die Öffnungen 106 in die Magazinschächte 24 gelangen können, wenn die Magazinabdeckung 104 in ihrer hier gezeigten Befüllstellung angeordnet ist.

In Fig. 22 ist der obere Bereich des Trommelmagazins 18 in einer weiteren Perspektivansicht gezeigt, wobei die Magazinabdeckung 104 nun in ihre die jeweiligen Magazinschächte 24 verdeckende beziehungsweise verschließende Verschlussstellung gedreht wurde. Gemäß den vorliegenden Darstellungen muss die Magazinabdeckung 104 einfach mit dem Uhrzeigersinn von ihrer Befüllstellung in die Verschlussstellung gedreht werden. In Folge dessen werden die Öffnungen 106 der Magazinabdeckung 104 so gegenüber den Magazinschächten 24 verdreht, dass die Magazinabdeckung 104 die Magazinschächte 24 zumindest insoweit verdeckt beziehungsweise verschließt, dass die Einlegeteile 26 nicht aus dem Trommelmagazin 18 herausfallen können.

### BEZUGSZEICHENLISTE

- 10: Spritzgusswerkzeug
- 12: Werkzeughälfte des Spritzgusswerkzeugs
- 14: Werkzeughälfte des Spritzgusswerkzeugs
- 16: Magazinvorrichtung
- 18: Trommelmagazin
- 20: Magazinaufnahme
- 22: Steuerung
- 24: Magazinschächte
- 26: Einlegeteile
- 28: Magazinabdeckung
- 30: Magazineinsatz
- 32: Nuten des Magazineinsatzes
- 34: Welle
- 36: Passfedern der Welle
- 38: Sensoren
- 40: Rotiereinrichtung
- 42: Pneumatikzylinder der Rotiereinrichtung
- 44: Drehbetätigung der Rotiereinrichtung
- 46: Gasdruckzylinder der Rotiereinrichtung
- 48: Vereinzelungseinrichtung
- 50: Durchgangsöffnung in der Magazinaufnahme
- 52: Arretierung für das Trommelmagazin an der Magazinaufnahme
- 54: Rastmechanismus an der Welle zum Verrasten des Trommelmagazins
- 56: Verzahnung der Welle
- 58: Zähne der Verzahnung
- 60: Eingriffsflächen der Zähne
- 62: Rückseiten der Zähne
- 64: Aufnahme für die Drehbetätigung
- 66: Achse zum Verschwenken der Drehbetätigung
- 68: Aufnahme für den Pneumatikzylinder
- 70: Schläuche für die Pneumatikzylinder
- 72: Vereinzelungseinheit
- 74: unterer Sperrstift
- 76: oberer Sperrstift
- 78: Vereinzelungskontur
- 80: Feder
- 82: Rückstellfeder
- 84: obere zurückversetzte Vertiefung der Vereinzelungskontur
- 86: untere zurückversetzte Vertiefung der Vereinzelungskontur
- 88: hervorstehender beziehungsweise verdickter Mittenbereich der Vereinzelungskontur
- 90: Pneumatikzylinder der Vereinzelungseinrichtung
- 92: Betätigungselement der Vereinzelungseinrichtung
- 94: Führungsbahn der zweiten Ausführungsform der Vereinzelungskontur
- 96: oberer zurückversetzter Abschnitt der Führungsbahn
- 98: unterer zurückversetzter Abschnitt der Führungsbahn
- 100: hervorstehender Mittenabschnitt der Führungsbahn
- 102: Fortsätze an den Sperrstiften für die zweite Ausführungsform der Vereinzelungseinheit
- 104: Magazinabdeckung
- 106: Öffnungen in der Magazinabdeckung

## Patentansprüche

1. Magazinvorrichtung (16) zum Zuführen von Einlegeteilen (26) in ein Spritzgusswerkzeug (10), umfassend
- ein Trommelmagazin (18) mit mehreren an unterschiedlichen Umfangspositionen des Trommelmagazins (18) angeordneten Magazinschächten (24), die sich in axialer Richtung des Trommelmagazins (18) erstrecken und dazu ausgelegt sind, die Einlegeteile (26) in einer jeweiligen Reihe übereinander angeordnet aufzunehmen;
- eine Magazinaufnahme (20) zum Aufnehmen des Trommelmagazins (18) mit einer Durchgangsöffnung (50);
- eine Rotiereinrichtung (40) zum Rotieren des Trommelmagazins (18), welche dazu ausgelegt ist, bei an der Magazinaufnahme (20) angeordnetem Trommelmagazin (18) die jeweiligen Magazinschächte (24) in eine Zuführstellung zu drehen, in der die jeweiligen Magazinschächte (24) oberhalb von der Durchgangsöffnung (50) angeordnet sind;
- eine Vereinzelungseinrichtung (48), welche dazu ausgelegt ist, die jeweiligen in den Magazinschächten (24) angeordneten Einlegeteile (26) zu vereinzeln und in Richtung der Durchgangsöffnung (50) der Magazinaufnahme (20) freizugeben.

2. Magazinvorrichtung (16) nach Anspruch 1,
**dadurch gekennzeichnet, dass**
die Magazinvorrichtung (16) eine Sensoreinrichtung aufweist, welche dazu ausgelegt ist, einen Füllstand der Magazinschächte (24) hinsichtlich der aufgenommenen Einlegeteile (26) zu erfassen, und/oder zu erfassen, wann eines der Einlegeteile (26) mittels der Vereinzelungseinrichtung (48) in Richtung der Durchgangsöffnung (50) der Magazinaufnahme (20) freigegeben wurde.

3. Magazinvorrichtung (16) nach Anspruch 1 oder 2,
**dadurch gekennzeichnet, dass**
die Rotiereinrichtung (40) eine an der Magazinaufnahme (20) gelagerte Welle (34) zum Aufnehmen und Rotieren des Trommelmagazins (18) aufweist.

4. Magazinvorrichtung (16) nach Anspruch 3,
**dadurch gekennzeichnet, dass**
die Welle (34) einen Rastmechanismus (54) zum Verrasten des auf die Welle (34) aufgesteckten Trommelmagazins (18) aufweist.

5. Magazinvorrichtung (16) nach Anspruch 3 oder 4,
**dadurch gekennzeichnet, dass**
die Rotiereinrichtung (40) eine translatorisch zwischen einer eingefahrenen und einer ausgefahrenen Stellung bewegbare Drehbetätigung (44) aufweist, die bei einer Bewegung von der eingefahrenen in die ausgefahrene Stellung in eine Verzahnung (56) der Welle (34) eingreift und die Welle (34) um einen Drehwinkel rotiert, der jeweiligen Abständen der Magazinschächte (24) in Umfangsrichtung entspricht.

6. Magazinvorrichtung (16) nach Anspruch 5,
**dadurch gekennzeichnet, dass**
die Rotiereinrichtung (40) einen Pneumatikzylinder (42) aufweist, welcher dazu ausgelegt ist, die Drehbetätigung (44) zwischen der eingefahrenen und ausgefahrenen Stellung zu bewegen.

7. Magazinvorrichtung (16) nach Anspruch 5 oder 6,
**dadurch gekennzeichnet, dass**
- die Drehbetätigung (44) um eine parallel zur Rotationsachse der Welle (34) verlaufende Achse (66) verschwenkbar gelagert ist,
- die Rotiereinrichtung (40) eine Federeinrichtung (46) aufweist, die eine Federkraft in Richtung der Welle (34) auf die Drehbetätigung (44) ausübt,
- die Verzahnung (56) so geformt ist, dass beim Ausfahren der Drehbetätigung (44) diese in Eingriff mit einer der Eingriffsflächen (60) jeweiliger Zähne (58) der Verzahnung (56) gelangt und beim Einfahren an einer von den Eingriffsflächen (60) abgewandten Rückseite (62) der Zähne (58) abgleitet und entgegen der Federkraft von der Verzahnung (56) von der Welle (34) weggeschwenkt wird.

8. Magazinvorrichtung (16) nach einem der Ansprüche 1 bis 4,
**dadurch gekennzeichnet, dass**
die Rotiereinrichtung (40) einen Motor, insbesondere einen Schrittmotor, aufweist, welcher dazu ausgelegt ist, die Welle (34) um einen Drehwinkel zu rotieren, der jeweiligen Abständen der Magazinschächte (24) in Umfangsrichtung entspricht

9. Magazinvorrichtung (16) nach einem der vorhergehenden Ansprüche,
**dadurch gekennzeichnet, dass**
- die Vereinzelungseinrichtung (48) je Magazinschacht (24) eine Vereinzelungseinheit (72) mit einem unteren Sperrstift (74) und einem oberen Sperrstift (76) sowie mit einer Vereinzelungskontur (78) aufweist;
- die Sperrstifte (74, 76) zwischen einer in den jeweiligen Magazinschacht (24) ragenden Sperrstellung und einer nicht in den Magazinschacht (24) ragenden Freigabestellung bewegbar sind;
- die Vereinzelungskonturen (78) in axialer Richtung des Trommelmagazins (18) zwischen einer unteren Endlage und einer oberen Endlage bewegbar und dazu ausgelegt sind, bei einer Bewegung von der unteren in die obere Endlage die Bewegungen der Sperrstifte (74, 76) so zu steuern, dass die jeweiligen an unterster Stelle in den Magazinschächten (24) angeordneten Einlegeteile (26) vereinzelt und nach unten aus den Magazinschächten (24) in Richtung der Durchgangsöffnung (50) der Magazinaufnahme (20) freigegeben werden.

10. Magazinvorrichtung (16) nach Anspruch 9,
**dadurch gekennzeichnet, dass**
- die Sperrstifte (74, 76) mittels einer jeweiligen Feder (80) mit einer Federkraft in Richtung der Freigabestellung beaufschlagt werden;
- die jeweilige Vereinzelungskontur (78) in der unteren Endlage den zugehörigen unteren Sperrstift (74) in die Sperrstellung zwingt, sodass das jeweilige in der untersten Stellung im Magazinschacht (24) angeordnete Einlegeteil (26) daran gehindert wird, nach unten aus dem Magazinschacht (24) zu fallen, wobei die Vereinzelungskontur (78) eine durch die Federkraft bedingte Bewegung des zugehörigen oberes Sperrstifts (76) in die Freigabestellung freigibt;
- die jeweilige Vereinzelungskontur (78) in der oberen Endlage eine durch die Federkraft bedingte Bewegung des zugehörigen unteren Sperrstifts (74) in die Freigabestellung freigibt, sodass das jeweilige in der untersten Stellung im Magazinschacht (24) angeordnete Einlegeteil (26) nach unten aus dem Magazinschacht (24) fallen kann, wobei die Vereinzelungskontur (78) den zugehörigen oberen Sperrstift (76) in die Sperrstellung zwingt, sodass das jeweilige in der zweituntersten Stellung im Magazinschacht angeordnete Einlegeteil (26) daran gehindert wird, nach unten aus dem Magazinschacht (24) zu fallen.

11. Magazinvorrichtung (16) nach Anspruch 10,
**dadurch gekennzeichnet, dass**
- die jeweiligen Vereinzelungskonturen (78) bezüglich des zugeordneten Magazinschachts (24) eine obere zurückversetzte Vertiefung (84) und eine untere zurückversetzte Vertiefung (86) sowie dazwischen einen hervorstehenden Mittenbereich (88) aufweisen;
- in der unteren Endlage der jeweiligen Vereinzelungskontur (78) der zugehörige untere Sperrstift (74) auf Höhe des hervorstehenden Mittenbereichs der Vereinzelungskontur (78) angeordnet ist und durch diese in die Sperrstellung gezwungen wird, wobei der zugehörige obere Sperrstift (76) auf Höhe der oberen Vertiefung (84) angeordnet ist und dadurch die Federkraft bedingte Bewegung des oberen Sperrstifts (76) in die Freigabestellung freigegeben ist;
- in der oberen Endlage der jeweiligen Vereinzelungskontur (78) der zugehörige untere Sperrstift (74) auf Höhe der unteren Vertiefung (86) der Vereinzelungskontur (78) angeordnet und dadurch die Federkraft bedingte Bewegung des unteren Sperrstifts (74) in die Freigabestellung freigegeben ist, wobei der zugehörige obere Sperrstift (76) auf Höhe des hervorstehenden Mittenbereichs (88) der Vereinzelungskontur (78) angeordnet ist und durch diese in die Sperrstellung gezwungen wird.

12. Magazinvorrichtung (16) nach Anspruch 9,
**dadurch gekennzeichnet, dass**
- die jeweiligen Vereinzelungskonturen (78) eine Führungsbahn (94) aufweisen, die bezüglich des zugeordneten Magazinschachts (24) einen oberen zurückversetzten Abschnitt (96) und einen unteren zurückversetzten Abschnitt (98) sowie dazwischen einen hervorstehenden Mittenabschnitt (100) aufweisen;
- die der jeweiligen Vereinzelungskontur (78) zugeordneten oberen und unteren Sperrstifte (74, 76) in die zugehörige Führungsbahn (94) eingreifen;
- in der unteren Endlage der jeweiligen Vereinzelungskontur (78) der zugehörige untere Sperrstift (74) auf Höhe des Mittenabschnitts (100) der Führungsbahn (94) angeordnet ist und durch diese in die Sperrstellung gezwungen wird, wobei der zugehörige obere Sperrstift (76) auf Höhe des oberen zurückversetzten Abschnitts (96) der Führungsbahn (94) angeordnet ist und durch diese in die Freigabestellung gezwungen wird;
- in der oberen Endlage der jeweiligen Vereinzelungskontur (78) der zugehörige untere Sperrstift (74) auf Höhe des unteren zurückversetzten Abschnitts (98) der Führungsbahn (94) angeordnet ist und dadurch in die Freigabestellung gezwungen wird, wobei der zugehörige obere Sperrstift (76) auf Höhe des Mittenabschnitts (100) der Führungsbahn (94) angeordnet ist und durch diese in die Sperrstellung gezwungen wird.

13. Magazinvorrichtung (16) nach einem der Ansprüche 9 bis 12,
**dadurch gekennzeichnet, dass**
die Vereinzelungskonturen (78) so geformt und zu den diesen zugeordneten Sperrstiften (74, 76) angeordnet sind, dass bei einer Bewegung von der unteren in die obere Endlage der jeweilige obere Sperrstift (76) zuerst seine Sperrstellung einnimmt, bevor der untere Sperrstift (74) seine Freigabestellung einnimmt.

14. Magazinvorrichtung (16) nach einem der Ansprüche 9 bis 13,
**dadurch gekennzeichnet, dass**
die Vereinzelungskonturen (78) so geformt und zu den diesen zugeordneten Sperrstiften angeordnet sind, dass bei einer Bewegung von der oberen in die untere Endlage der jeweilige untere Sperrstift (74) zuerst seine Sperrstellung einnimmt, bevor der obere Sperrstift (76) seine Freigabestellung einnimmt.

15. Magazinvorrichtung (16) nach einem der Ansprüche 9 bis 14,
**dadurch gekennzeichnet, dass**
die Vereinzelungskonturen (78) mittels einer jeweiligen Rückstellfeder (82) beaufschlagt werden, die eine Federkraft in Richtung der unteren Endstellung auf die Vereinzelungskonturen (78) ausübt.

16. Magazinvorrichtung (16) nach einem der Ansprüche 9 bis 15,
**dadurch gekennzeichnet, dass**
die Magazinvorrichtung (16) einen Aktor, insbesondere einen Pneumatikzylinder (42), aufweist, welcher dazu ausgelegt ist, die jeweiligen Vereinzelungskonturen (78) von ihrer unteren in ihre obere Endstellung zu bewegen, wenn der zur jeweiligen Vereinzelungseinheit (72) gehörende Magazinschacht (24) oberhalb von der Durchgangsöffnung (50) der Magazinaufnahme (20) angeordnet ist.

17. Verfahren zum Betreiben einer Magazinvorrichtung (16) nach einem der vorhergehenden Ansprüche, welche an einem Spritzgusswerkzeug (10) angeordnet ist, das dazu ausgelegt ist, ein Einlegeteil (26) im Bereich einer Kavität des Spritzgusswerkzeugs (10) zu positionieren und unter Ausbildung eines Spritzgussteils zu umspritzen, umfassend die Schritte:
- Positionieren von einem der Magazinschächte (24) in der Zuführstellung;
- Vereinzeln und Freigeben der in dem in der Zuführstellung positionierten Magazinschacht (24) angeordneten Einlegeteile (26) in Richtung der Durchgangsöffnung (50) der Magazinaufnahme (20) mittels der Vereinzelungseinrichtung (48) vor einem jeweiligen Spritzgussvorgang des Spritzgusswerkzeugs (10), sodass das jeweils vereinzelte Einlegeteil (26) ins Innere des Spritzgusswerkzeugs (10) gelangt;
- Rotieren des Trommelmagazins (18) mittels der Rotiereinrichtung (40), sobald sich in dem in der Zuführstellung positionierten Magazinschacht (24) keine Einlegeteile (26) (26) mehr befinden, sodass der in Umfangsrichtung nächste Magazinschacht (24) in der Zuführstellung positioniert wird, wonach die dann in dem in der Zuführstellung positionierten Magazinschacht (24) angeordneten Einlegeteile (26) in Richtung der Durchgangsöffnung (50) der Magazinaufnahme (20) mittels der Vereinzelungseinrichtung (48) vor einem jeweiligen Spritzgussvorgang des Spritzgusswerkzeugs (10) vereinzelt und freigegeben werden.

18. Verfahren nach Anspruch 17,
**dadurch gekennzeichnet, dass**
eine Steuerung (22) der Spritzgussmaschine die Vereinzelungseinrichtung (48) und/oder die Rotiereinrichtung (40) in Abhängigkeit von mittels einer Sensoreinrichtung der Magazinvorrichtung (16) bereitgestellten Sensorsignalen steuert, die einen Füllstand der Magazinschächte (24) hinsichtlich der aufgenommenen Einlegeteile (26) und/oder einen Zeitpunkt charakterisieren, wann eines der Einlegeteile (26) mittels der Vereinzelungseinrichtung (48) in Richtung der Durchgangsöffnung (50) der Magazinaufnahme (20) freigegeben wurde.

## Claims

1. Magazine apparatus (16) for feeding insert parts (26) into an injection moulding tool (10), comprising
- a drum magazine (18) having multiple magazine tubes (24), which are arranged at different circumferential positions on the drum magazine (18), extend in an axial direction of the drum magazine (18) and are designed to take up the insert parts (26) in a manner arranged one on top of another in a respective row;
- a magazine take-up means (20) for taking up the drum magazine (18) by way of a through-opening (50);
- a rotating device (40) for rotating the drum magazine (18), which rotating device is designed to rotate the respective magazine tubes (24) into a feed position when the drum magazine (18) is arranged on the magazine take-up means (20), in which feed position the respective magazine tubes (24) are arranged above the through-opening (50);
- a separating device (48), which is designed to separate out the respective insert parts (26) arranged in the magazine tubes (24) and to release them in the direction of the through-opening (50) in the magazine take-up means (20).

2. Magazine apparatus (16) according to Claim 1, **characterized in that**
the magazine apparatus (16) has a sensor device, which is designed to detect a fill level of the magazine tubes (24) in terms of the taken-up insert parts (26), and/or to detect when one of the insert parts (26) has been released by means of the separating device (48) in the direction of the through-opening (50) in the magazine take-up means (20).

3. Magazine apparatus (16) according to Claim 1 or 2, **characterized in that**
the rotating device (40) comprises a shaft (34), which is mounted on the magazine take-up means (20), for taking up and rotating the drum magazine (18).

4. Magazine apparatus (16) according to Claim 3, **characterized in that**
the shaft (34) has a detent mechanism (54) for locking the drum magazine (18) that is fitted on the shaft (34).

5. Magazine apparatus (16) according to Claim 3 or 4, **characterized in that**
the rotating device (40) has a rotary actuator (44), which can be moved in translation between a retracted and an extended position, which in the course of a movement from the retracted into the extended position engages into a toothing (56) of the shaft (34) and rotates the shaft (34) by a rotational angle which corresponds to respective distances between the magazine tubes (24) in the circumferential direction.

6. Magazine apparatus (16) according to Claim 5, **characterized in that**
the rotating device (40) has a pneumatic cylinder (42) which is designed to move the rotary actuator (44) between the retracted and the extended position.

7. Magazine apparatus (16) according to Claim 5 or 6, **characterized in that**
- the rotary actuator (44) is mounted pivotably about an axis (66) running parallel to the rotational axis of the shaft (34),
- the rotating device (40) has a spring device (46), which exerts a spring force in the direction of the shaft (34) on the rotary actuator (44),
- the toothing (56) is shaped such that, when the rotary actuator (44) is being extended, it comes into engagement with one of the engagement surfaces (60) of respective teeth (58) of the toothing (56), and, when it is being retracted, slides on a rear side (62), facing away from the engagement surfaces (60), of the teeth (58) and is pivoted away from the shaft (34) by the toothing (56) counter to the spring force.

8. Magazine apparatus (16) according to one of Claims 1 to 4,
**characterized in that**
the rotating device (40) has a motor, in particular a stepping motor, which is designed to rotate the shaft (34) about a rotational angle which corresponds to respective distances between the magazine tubes (24) in the circumferential direction.

9. Magazine apparatus (16) according to one of the preceding claims,
**characterized in that**
- for each magazine tube (24), the separating device (48) comprises a separating unit (72) having a lower blocking pin (74) and an upper blocking pin (76) and having a separating contour (78);
- the blocking pins (74, 76) can be moved between a blocking position, in which they project into the respective magazine tube (24), and a release position, in which they do not project into the magazine tube (24);
- the separating contours (78) can be moved in the axial direction of the drum magazine (18) between a lower end position and an upper end position, and are designed to control the movements of the blocking pins (74, 76) in the course of a movement from the lower into the upper end position such that the respective insert parts (26) arranged at the lowermost position in the magazine tubes (24) are separated out and released downwards out of the magazine tubes (24) in the direction of the through-opening (50) in the magazine take-up means (20).

10. Magazine apparatus (16) according to Claim 9, **characterized in that**
- the blocking pins (74, 76) are subjected to a spring force in the direction of the release position by means of a respective spring (80);
- the respective separating contour (78) in the lower end position forces the associated lower blocking pin (74) into the blocking position, with the result that the respective insert part (26) arranged in the lowermost position in the magazine tube (24) is prevented from dropping downwards out of the magazine tube (24), wherein the separating contour (78) enables a movement, induced by the spring force, of the associated upper blocking pin (76) into the release position;
- the respective separating contour (78) in the upper end position enables a movement, induced by the spring force, of the associated lower blocking pin (74) into the release position, with the result that the respective insert part (26) arranged in the lowermost position in the magazine tube (24) can drop downwards out of the magazine tube (24), wherein the separating contour (78) forces the associated upper blocking pin (76) into the blocking position, with the result that the respective insert part (26) arranged in the second-lowermost position in the magazine tube is prevented from dropping downwards out of the magazine tube (24).

11. Magazine apparatus (16) according to Claim 10, **characterized in that**,
- with respect to the associated magazine tube (24), the respective separating contours (78) have an upper recessed depression (84) and a lower recessed depression (86) and a projecting centre region (88) in between;
- in the lower end position of the respective separating contour (78), the associated lower blocking pin (74) is arranged at the level of the projecting centre region of the separating contour (78) and is forced by said separating contour into the blocking position, wherein the associated upper blocking pin (76) is arranged at the level of the upper depression (84) and as a result the movement, induced by the spring force, of the upper blocking pin (76) into the release position is enabled;
- in the upper end position of the respective separating contour (78), the associated lower blocking pin (74) is arranged at the level of the lower depression (86) of the separating contour (78) and as a result the movement, induced by the spring force, of the lower blocking pin (74) into the release position is enabled, wherein the associated upper blocking pin (76) is arranged at the level of the projecting centre region (88) of the separating contour (78) and is forced by said separating contour into the blocking position.

12. Magazine apparatus (16) according to Claim 9, **characterized in that**
- the respective separating contours (78) have a guide track (94), which guide tracks, with respect to the associated magazine tube (24), have an upper recessed portion (96) and a lower recessed portion (98) and a projecting centre portion (100) in between;
- the upper and lower blocking pins (74, 76) assigned to the respective separating contour (78) engage into the associated guide track (94);
- in the lower end position of the respective separating contour (78), the associated lower blocking pin (74) is arranged at the level of the centre portion (100) of the guide track (94) and is forced by said guide track into the blocking position, wherein the associated upper blocking pin (76) is arranged at the level of the upper recessed portion (96) of the guide track (94) and is forced by said guide track into the release position;
- in the upper end position of the respective separating contour (78), the associated lower blocking pin (74) is arranged at the level of the lower recessed portion (98) of the guide track (94) and as a result is forced into the release position, wherein the associated upper blocking pin (76) is arranged at the level of the centre portion (100) of the guide track (94) and is forced by said guide track into the blocking position.

13. Magazine apparatus (16) according to one of Claims 9 to 12,
**characterized in that**
the separating contours (78) are shaped and are arranged in relation to the blocking pins (74, 76) assigned thereto such that, in the course of a movement from the lower into the upper end position, the respective upper blocking pin (76) first of all assumes its blocking position, before the lower blocking pin (74) assumes its release position.

14. Magazine apparatus (16) according to one of Claims 9 to 13,
**characterized in that**
the separating contours (78) are shaped and are arranged in relation to the blocking pins assigned thereto such that, in the course of a movement from the upper into the lower end position, the respective lower blocking pin (74) first of all assumes its blocking position, before the upper blocking pin (76) assumes its release position.

15. Magazine apparatus (16) according to one of Claims 9 to 14,
**characterized in that**
the separating contours (78) are subjected to load by means of a respective return spring (82), which exerts a spring force in the direction of the lower end position on the separating contours (78).

16. Magazine apparatus (16) according to one of Claims 9 to 15,
**characterized in that**
the magazine apparatus (16) has an actuator, in particular a pneumatic cylinder (42), which is designed to move the respective separating contours (78) from their lower into their upper end position when the magazine tube (24) that is part of the respective separating unit (72) is arranged above the through-opening (50) of the magazine take-up means (20).

17. Method for operating a magazine apparatus (16) according to one of the preceding claims, which magazine apparatus is arranged on an injection moulding tool (10) which is designed to position an insert part (26) in the region of a cavity of the injection moulding tool (10) and to encapsulate said insert part by injection moulding so as to form an injection moulded part, said method comprising the following steps:
- positioning one of the magazine tubes (24) in the feed position;
- separating out and releasing the insert parts (26) that are arranged in the magazine tube (24) positioned in the feed position in the direction of the through-opening (50) in the magazine take-up means (20) by means of the separating device (48) prior to a respective injection moulding operation of the injection moulding tool (10), with the result that the respectively separated-out insert part (26) enters the injection moulding tool (10);
- rotating the drum magazine (18) by means of the rotating device (40) once there are no more insert parts (26) (26) in the magazine tube (24) positioned in the feed position, with the result that the magazine tube (24) which is next in the circumferential direction is positioned in the feed position, after which the insert parts (26) that are then arranged in the magazine tube (24) positioned in the feed position are separated out and released in the direction of the through-opening (50) of the magazine take-up means (20) by means of the separating device (48) prior to a respective injection moulding operation of the injection moulding tool (10).

18. Method according to Claim 17,
**characterized in that**
a controller (22) of the injection moulding machine controls the separating device (48) and/or the rotating device (40) in dependence on sensor signals provided by means of a sensor device of the magazine apparatus (16), which sensor signals characterize a fill level of the magazine tubes (24) in terms of the taken-up insert parts (26) and/or a point in time at which one of the insert parts (26) has been released by means of the separating device (48) in the direction of the through-opening (50) in the magazine take-up means (20).

## Revendications

1. Dispositif de magasin (16) servant à l'alimentation en inserts (26) d'un outil de moulage par injection (10), comportant
- un magasin à tambour (18) doté de plusieurs conduits de magasin (24) disposés à différentes positions périphériques du magasin à tambour (18), lesquels s'étendent dans la direction axiale du magasin à tambour (18) et sont conçus pour loger les inserts (26) de manière disposée les uns au-dessus des autres dans une rangée respective ;
- un logement de magasin (20) pour loger le magasin à tambour (18) et doté d'une ouverture traversante (50) ;
- un dispositif de rotation (40) pour faire tourner le magasin à tambour (18), lequel est conçu pour, en cas de magasin à tambour (18) disposé au niveau du logement de magasin (20), faire tourner les conduits de magasin (24) respectifs dans une position d'alimentation dans laquelle les conduits de magasin (24) respectifs sont disposés au-dessus de l'ouverture traversante (50) ;
- un dispositif de séparation (48), lequel est conçu pour séparer les inserts (26) respectifs disposés dans les conduits de magasin (24) et pour les libérer en direction de l'ouverture traversante (50) du logement de magasin (20).

2. Dispositif de magasin (16) selon la revendication 1, **caractérisé en ce que**
le dispositif de magasin (16) comprend un dispositif de détection, lequel est conçu pour détecter un état de remplissage des conduits de magasin (24) en termes d'inserts (26) logés, et/ou pour détecter quand l'un des inserts (26) a été libéré au moyen du dispositif de séparation (48) en direction de l'ouverture traversante (50) du logement de magasin (20).

3. Dispositif de magasin (16) selon la revendication 1 ou 2,
**caractérisé en ce que**
le dispositif de rotation (40) comprend un arbre (34) monté sur le logement de magasin (20) pour loger et faire tourner le magasin à tambour (18).

4. Dispositif de magasin (16) selon la revendication 3, **caractérisé en ce que**
l'arbre (34) comprend un mécanisme d'encliquetage (54) pour l'encliquetage du magasin à tambour (18) enfiché sur l'arbre (34).

5. Dispositif de magasin (16) selon la revendication 3 ou 4,
**caractérisé en ce que**
le dispositif de rotation (40) comprend un actionnement rotatif (44) déplaçable en translation entre une position rentrée et une position sortie, lequel actionnement, lors d'un déplacement de la position rentrée à la position sortie, s'engrène dans une denture (56) de l'arbre (34) et fait tourner l'arbre (34) d'un angle de rotation qui correspond aux espacements respectifs des conduits de magasin (24) dans la direction périphérique.

6. Dispositif de magasin (16) selon la revendication 5, **caractérisé en ce que**
le dispositif de rotation (40) comprend un cylindre pneumatique (42), lequel est conçu pour déplacer l'actionnement rotatif (44) entre la position rentrée et la position sortie.

7. Dispositif de magasin (16) selon la revendication 5 ou 6,
**caractérisé en ce que**
- l'actionnement rotatif (44) est monté pivotant autour d'un axe (66) s'étendant parallèlement à l'axe de rotation de l'arbre (34),
- le dispositif de rotation (40) comprend un dispositif ressort (46) qui exerce sur l'actionnement rotatif (44) une force de ressort en direction de l'arbre (34),
- la denture (56) est formée de telle sorte que, lors de la sortie du dispositif d'actionnement (44), celui-ci s'engrène avec l'une des surfaces d'engrènement (60) de dents (58) respectives de la denture (56) et, lors de la rentrée, glisse sur un côté arrière (62) des dents (58) opposé aux surfaces d'engrènement (60) et est pivoté à l'écart de la denture (56) de l'arbre (34) à l'encontre de la force de ressort.

8. Dispositif de magasin (16) selon l'une des revendications 1 à 4,
**caractérisé en ce que**
le dispositif de rotation (40) comprend un moteur, en particulier un moteur pas à pas, lequel est conçu pour faire tourner l'arbre (34) d'un angle de rotation qui correspond aux espacements respectifs des conduits de magasin (24) dans la direction périphérique.

9. Dispositif de magasin (16) selon l'une des revendications précédentes,
**caractérisé en ce que**
- le dispositif de séparation (48) comprend, pour chaque conduit de magasin (24), une unité de séparation (72) dotée d'une goupille de blocage inférieure (74) et d'une goupille de blocage supérieure (76) ainsi que d'un contour de séparation (78) ;
- les goupilles de blocage (74, 76) sont déplaçables entre une position de blocage faisant saillie dans le conduit de magasin (24) respectif et une position de libération ne faisant pas saillie dans le conduit de magasin (24) ;
- les contours de séparation (78) sont déplaçables dans la direction axiale du magasin à tambour (18) entre une position finale inférieure et une position finale supérieure et sont conçus pour, lors d'un déplacement de la position finale inférieure à la position finale supérieure, commander les déplacements des goupilles de blocage (74, 76) de telle sorte que les inserts (26) respectifs disposés au point le plus bas dans les conduits de magasin (24) soient séparés et libérés vers le bas hors des conduits de magasin (24) en direction de l'ouverture traversante (50) du logement de magasin (20).

10. Dispositif de magasin (16) selon la revendication 9, **caractérisé en ce que**
- les goupilles de blocage (74, 76) sont soumises à une force de ressort en direction de la position de libération au moyen d'un ressort (80) respectif ;
- le contour de séparation (78) respectif dans la position finale inférieure force la goupille de blocage inférieue (74) associée dans la position de blocage, de telle sorte que l'insert (26) respectif disposé dans la position la plus basse dans le conduit de magasin (24) soit empêché de tomber vers le bas hors du conduit de magasin (24), le contour de séparation (78) autorisant un déplacement, causé par la force de ressort, de la goupille de blocage (76) supérieure associée dans la position de libération ;
- le contour de séparation (78) respectif dans la position finale supérieure autorise un déplacement, causé par la force de ressort, de la goupille de blocage (74) inférieure associée dans la position de libération, de telle sorte que l'insert (26) respectif disposé dans la position la plus basse dans le conduit de magasin (24) puisse tomber vers le bas hors du conduit de magasin (24), le contour de séparation (78) forçant la goupille de blocage (76) supérieure associée dans la position de blocage, de telle sorte que l'insert (26) respectif disposé dans la deuxième position en partant du bas dans le conduit de magasin soit empêché de tomber vers le bas hors du conduit de magasin (24).

11. Dispositif de magasin (16) selon la revendication 10,
**caractérisé en ce que**
- les contours de séparation (78) respectifs comprennent, par rapport au conduit de magasin (24) associé, un évidement supérieur (84) en retrait et un évidement inférieur (86) en retrait ainsi qu'une région centrale (88) saillante entre ceux-ci ;
- dans la position finale inférieure du contour de séparation (78) respectif, la goupille de blocage inférieure (74) associée est disposée à hauteur de la région centrale saillante du contour de séparation (78) et est forcée par celui-ci dans la position de blocage, la goupille de blocage supérieure (76) associée étant disposée à hauteur du renfoncement supérieur (84) et par conséquent le déplacement, causé par la force de ressort, de la goupille de blocage supérieure (76) dans la position de libération étant autorisé ;
- dans la position finale supérieure du contour de séparation (78) respectif, la goupille de blocage inférieure (74) associée est disposée à hauteur de l'évidement inférieur (86) du contour de séparation (78) et par conséquent le déplacement, causé par la force de ressort, de la goupille de blocage inférieure (74) dans la position de libération est autorisé, la goupille de blocage supérieure (76) associée étant disposée à hauteur de la région centrale saillante (88) du contour de séparation (78) et étant forcée par celui-ci dans la position de blocage.

12. Dispositif de magasin (16) selon la revendication 9, **caractérisé en ce que**
- les contours de séparation (78) respectifs comprennent une voie de guidage (94) qui comprend, par rapport au conduit de magasin (24) associé, une partie supérieure (96) en retrait et une partie inférieure (98) en retrait ainsi qu'une partie centrale (100) saillante entre celles-ci ;
- les goupilles de blocages supérieure et inférieure (74, 76) associées au contour de séparation (78) respectif viennent en prise dans la voie de guidage (94) associée ;
- dans la position finale inférieure du contour de séparation (78) respectif, la goupille de blocage inférieure (74) associée est disposée à hauteur de la partie centrale (100) de la voie de guidage (94) et est forcée par celle-ci dans la position de blocage, la goupille de blocage supérieure (76) associée étant disposée à hauteur de la partie supérieure (96) en retrait de la voie de guidage (94) et étant forcée par celle-ci dans la position de libération ;
- dans la position finale supérieure du contour de séparation (78) respectif, la goupille de blocage inférieure (74) associée est disposée à hauteur de la partie inférieure (98) en retrait de la voie de guidage (94) et est par conséquent forcée dans la position de libération, la goupille de blocage supérieure (76) associée étant disposée à hauteur de la partie centrale (100) de la voie de guidage (94) et étant forcée par celle-ci dans la position de blocage.

13. Dispositif de magasin (16) selon l'une des revendications 9 à 12,
**caractérisé en ce que**
les contours de séparation (78) sont formés et disposés par rapport aux goupilles de blocage (74, 76) associées à ceux-ci de telle sorte que, lors d'un déplacement de la position finale inférieure à la position finale supérieure, la goupille de blocage supérieure (76) respective adopte d'abord sa position de blocage, avant que la goupille de blocage inférieure (74) n'adopte sa position de libération.

14. Dispositif de magasin (16) selon l'une des revendications 9 à 13,
**caractérisé en ce que**
les contours de séparation (78) sont formés et disposés par rapport aux goupilles de blocage associées à ceux-ci de telle sorte que, lors d'un déplacement de la position finale supérieure à la position finale inférieure, la goupille de blocage inférieure (74) respective adopte d'abord sa position de blocage, avant que la goupille de blocage supérieure (76) n'adopte sa position de libération.

15. Dispositif de magasin (16) selon l'une des revendications 9 à 14,
**caractérisé en ce que**
les contours de séparation (78) sont sollicités au moyen d'un ressort de rappel (82) respectif qui exerce sur les contours de séparation (78) une force de ressort en direction de la position finale inférieure.

16. Dispositif de magasin (16) selon l'une des revendications 9 à 15,
**caractérisé en ce que**
le dispositif de magasin (16) comprend un actionneur, en particulier un cylindre pneumatique (42), lequel est conçu pour déplacer les contours de séparation (78) respectifs de leur position finale inférieure à leur position finale supérieure lorsque le conduit de magasin (24) appartenant à l'unité de séparation (72) respective est disposé au-dessus de l'ouverture traversante (50) du logement de magasin (20).

17. Procédé de fonctionnement d'un dispositif de magasin (16) selon l'une des revendications précédentes, lequel est disposé au niveau d'un outil de moulage par injection (10) qui est conçu pour positionner un insert (26) dans la région d'une cavité de l'outil de moulage par injection (10) et pour le surmouler en formant une pièce moulée par injection, comportant les étapes suivantes :
- positionnement de l'un des conduits de magasin (24) dans la position d'alimentation ;
- séparation et libération des inserts (26) disposés dans le conduit de magasin (24) positionné dans la position d'alimentation en direction de l'ouverture traversante (50) du logement de magasin (20) au moyen du dispositif de séparation (48) avant une opération de moulage par injection respective de l'outil de moulage par injection (10), de sorte que l'insert (26) séparé respectivement parvienne dans l'intérieur de l'outil de moulage par injection (10) ;
- rotation du magasin à tambour (18) au moyen du dispositif de rotation (40), dès qu'aucun insert (26) (26) ne se trouve plus dans le conduit de magasin (24) positionné dans la position d'alimentation, de sorte que le conduit de magasin (24) suivant dans la direction périphérique soit positionné dans la position d'alimentation, après quoi les inserts (26) alors disposés dans le conduit de magasin (24) positionné dans la position d'alimentation sont séparés et libérés en direction de l'ouverture traversante (50) du logement de magasin (20) au moyen du dispositif de séparation (48) avant une opération de moulage par injection respective de l'outil de moulage par injection (10).

18. Procédé selon la revendication 17,
**caractérisé en ce**
**qu'**une commande (22) de la machine de moulage par injection commande le dispositif de séparation (48) et/ou le dispositif de rotation (40) en fonction de signaux de capteur produits au moyen d'un dispositif de détection du dispositif de magasin (16), lesquels signaux caractérisent un état de remplissage des conduits de magasin (24) en termes d'inserts (26) logés et/ou d'un instant auquel l'un des inserts (26) a été libéré au moyen du dispositif de séparation (48) en direction de l'ouverture traversante (50) du logement de magasin (20).
